# EUROPEAN PATENT APPLICATION

(11) **EP 4 556 829 A1**
(43) Date of publication of application: **21.05.2025**
(21) Application number: 23941694.4
(22) Date of filing: 13.06.2023
(51) Int. Cl.: F25D 23/06, F16L 59/065, B29C 45/14

(54) **VACUUM ADIABATIC BODY AND METHOD FOR MANUFACTURING VACUUM ADIABATIC BODY**

(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR); LEE, Sungsub, Seoul 08592 (KR); BAE, Jaehyun, Seoul 08592 (KR)
(74) Representative: Ter Meer Steinmeister & Partner
(86) International application number: PCT/KR2023/008145
(87) International publication number: WO 2024/257911

(57) **Abstract**

The vacuum adiabatic body of the present invention may include: a first plate having a first temperature; a second plate having a second temperature that differs from the first temperature; and a vacuum space provided between the first and second plates.

## Description

### TECHNICAL FIELD

The present invention relates to a vacuum adiabatic body and a method for manufacturing the vacuum adiabatic body.

### BACKGROUND ART

Adiabatic performance may be improved by forming an adiabatic wall using vacuum. A device of which at least a portion of an internal space is provided in a vacuum state to achieve an adiabatic effect may be called a vacuum adiabatic body.

The applicant has developed a technology to obtain a vacuum adiabatic body that may be used in various devices and home appliances, and has disclosed a vacuum adiabatic body and a refrigerator in Korean Patent Publication No. 1020200001396A. The vacuum adiabatic body of the cited document discloses a structure in which a heat exchanger is installed inside a vacuum space.

The cited document proposes a self-configuration and support structure in which the heat exchanger is placed in the vacuum space. The cited document does not disclose a specific installation structure of the heat exchanger and its relationship with other members. For example, it does not disclose the relationship between the heat exchanger and other members inside the vacuum space, or a method of mounting the heat exchanger.

### DISCLOSURE OF THE INVENTION

### TECHNICAL PROBLEM

The present invention proposes an installation structure of a heat exchanger without a loss of adiabatic efficiency.

In addition to the examples proposed above, the present invention proposes specific solutions to problems and solutions for solving the problems in [Technical Solution] and [Best Mode].

### TECHNICAL SOLUTION

The vacuum adiabatic body of the present invention may include: a first plate having a first temperature; a second plate having a second temperature that differs from the first temperature; and a vacuum space provided between the first and second plates. The vacuum adiabatic body of the present invention may include a sealing part that seals the first plate and the second plate to provide the vacuum space. A heat exchanger mounted in the vacuum space may be included.

Optionally, the heat exchanger may be provided to be in contact with at least two refrigerant pipes. The heat exchanger may have at least two vertically extending straight section. At least a portion of the heat exchanger may extend vertically against gravity to perform gas-liquid separation. The vacuum adiabatic body may have at least two of rear, top, and bottom surfaces, left and right surfaces, and machine room surfaces. In order to maintain a shape of the first plate, a support frame connecting an opening of the first plate may be provided. The support frame may have a ' 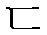 ' shape. The heat exchanger may have a first terminal and a second terminal. The first terminal may be withdrawn by being bent, or the second terminal may be withdrawn without bending.

Optionally, the present invention may include a support configured to support the vacuum space. The support may provide a single structure by coupling a commonization unit, which is commonly used. The commonization unit may be used on at least one of the largest surfaces of the several surfaces of the vacuum adiabatic body. Other surfaces of the vacuum adiabatic body may be provided by cutting and slicing the commonization unit. The support may provide a single structure by coupling a commonization unit, which is commonly used. The commonization unit may be used on at least one of the smallest surfaces of the several surfaces of the vacuum adiabatic body. Other surfaces of the vacuum adiabatic body may be provided with a plurality of the commonization unit. The support may be provided by coupling at least two units, and a gap may be provided between the at least two units. The at least two units may not meet each other in the gap. The support may be provided by coupling at least two units, and a gap may be provided between the at least two units. The gaps provided in two adjacent supports may not meet each other. The support may be provided by assembling a member provided by the commonization unit and at least one of methods of cutting of the commonization unit, and slicing of the commonization unit. The heat exchanger may be supported on a support that supports the vacuum space.

Optionally, the vacuum adiabatic body may have at least two of the rear, top and bottom surfaces, the left and right surfaces, and the machine room surface. Two adjacent supports placed on two adjacent surfaces may be in contact with each other. Two adjacent supports placed on two adjacent surfaces may have a side surface of one of the supports, which is in contact with an inner surface of the support of the other surface. Two adjacent supports placed on two adjacent surfaces may have all or a portion of the side surface of one of the supports, which are in contact with the inner surface of the support of the other surface. Two adjacent supports placed on either two adjacent surfaces may have all or a portion of the inner surface of one of the supports, which are in contact with the side surface of the other surface of the support. When observing any surface of the vacuum adiabatic body vertically, the support may have a first area extending in a longitudinal direction of the vacuum space, and a second area extending in a thickness direction of the vacuum space. A port may be disposed to overlap either the first area or the second area or the first area and the second area. The port may be disposed so as not to overlap the support in the thickness direction of the vacuum space. At least one end of the heat exchanger may be disposed on the first area. At least one end of the heat exchanger may be disposed on the second area. A through-hole connecting the first and second spaces may be defined in the first area.

Optionally, a support may be mounted as a single structure provided by coupling at least two units on one surface of the vacuum adiabatic body. One end of the heat exchanger may be bent at least once along a bending direction of the vacuum space. After mounting the support on the second plate, the first plate may be mounted. The support may be temporarily assembled with the second plate by a clip. The support and the heat exchanger may be mounted as one body on the second plate. The one body may be movable on the second plate, or the heat exchanger may be movable with respect to the support.

Optionally, the heat exchanger may be supported on an injection structure provided during injection of the support. The injection structure may include an injection base and a guide bar. The heat exchanger may be supported on the guide bar. During the injection, an injection liquid may flow into the injection base after passing through the guide bar. The support may include first and second support plates vertically spaced apart from each other. The guide bar may be connected to either of the first or second support plates. A size of the guide bar may be greater than that of the bar of the support. A gap block attached to a free end of the guide bar may be included. It may include the support that supports the vacuum space. The heat exchanger mounted in the vacuum space may be included. The structure supporting the heat exchanger may support the heat exchanger in an open curve. At least a portion of the heat exchanger may include a seating part having a shape corresponding to an outer shape of the heat exchanger. The seating part may be deformed during and after insertion of the heat exchanger. The gap block may be additionally provided in the seating part.

Optionally, the heat exchanger may be supported on the injection structure provided during the injection of the support. The structure supporting the heat exchanger may be provided integrally with the structure maintaining a gap between the first and second plates. The structure supporting the heat exchanger may include an extension bar extending as one body from the support. The extension bars may be provided in a pair. The structure supporting the heat exchanger may include a seating part of the first support plate and a gap block of the second support plate. The seating part and the gap block may be provided to be integrated with the support.

Optionally, the structure supporting the heat exchanger may be an injection structure. The injection structure may include a guide bar for injecting an injection liquid, and an injection base through which the injection liquid is spread. The heat exchanger may be supported on at least one of the first plate or the second plate. The heat exchanger may not be in contact with the support maintaining the vacuum space.

Optionally, the heat exchanger may include a first extension and a third extension extending predominantly in the vertical direction. A second extension extending predominantly in a left and right direction may be included. The first extension may be adjacent to an evaporator. The first extension part may be shorter than the third extension part. The first extension part may be longer than the second extension part. The heat exchanger may have a first terminal adjacent to the evaporator and a second terminal adjacent to a compressor. At least a portion of the first terminal may be withdrawn by being bent in the vertical direction. At least a portion of the second terminal may be withdrawn without the bending. A suction pipe of the first terminal may be bent twice. A discharge pipe of the first terminal may be bent once. The suction pipe of the second terminal may be bent and withdrawn. The discharge pipe of the second terminal may be withdrawn without the bending. At least one of the first terminal and the second terminal may be branched inside the vacuum space.

Optionally, the heat exchanger may not be bent in the thickness direction of the vacuum space. A radiation resistance sheet may have a removed part in which at least a portion of the radiation resistance sheet is removed in an area on which the heat exchanger is disposed. The radiation resistance sheet may be provided by cutting one plate to provide the removed part. The radiation resistance sheet may not be removed at least in a portion of the area on which the suction pipe of the heat exchanger is placed. At least a portion of the radiation resistance sheet may not be in contact with the heat exchanger. The radiation resistance sheet may be supported on the bar of a lattice on which the heat exchanger is placed.

Optionally, the support may be provided by coupling at least two units. A gap may be provided between at least two units. The heat exchanger may be placed in the gap. The radiation resistance sheet may be larger than the unit of the support. A portion of the gap may be covered by the radiation resistance sheet. A portion of the gap may not be covered by the radiation resistance sheet. An end portion of the heat exchanger may be withdrawn from the other lattice of the support. The end portion of the heat exchanger may have a portion extending in a direction obliquely inclined with respect to the extension direction of the lattice forming the support.

Optionally, the heat exchanger mounted in the vacuum space and having a pipe passing through at least one of the first plate and the second plate may be provided. A joint between the end portion of the heat exchanger and at least one of the first and second plates may be provided. The joint may be provided as a joint tube or as a sealed tube. The joint may be provided larger than the pipe. The joint may use the same material as at least one of the pipe and the first and second plates. The joint may be reduced in size when moves away from the plate. The joint may become successively smaller as its moves away from the plate. The joint may be provided with a stepped portion so that its size decreases as it moves away from the plate. A flange configured to be coupled to the plate may be provided. The flange may be provided as one body with the plate.

A method for manufacturing a vacuum adiabatic body of the present disclosure may include a process of expanding an end portion of a connection pipe, a process of disposing a heat exchanger in a vacuum space, a process of coupling the heat exchanger to a plate, a process of inverting a coupling body of the connection pipe and the plate, a process of coupling the end portion of the connection pipe to the heat exchanger, and a process of assembling a refrigeration system.

Optionally, the process of inverting the connection body of the connection pipe and the plate may be performed before the process of connecting the end portion of the connection pipe to the heat exchanger. After the connection pipe and the end portion of the connection pipe are connected, the vacuum adiabatic body may be inverted again. At least one of the processes of expanding the end portion of the connection pipe and disposing the heat exchanger in the vacuum space may be performed before at least one of the steps of inverting a coupling component of the connection pipe and the plate and coupling the end portion of the connection pipe to the heat exchanger. The process of connecting the end portion of the connection pipe to the heat exchanger, and the process of assembling the refrigeration system may be performed after the process of inverting the connecting component of the connection pipe and the plate.

Optionally, the support may be disposed so that the heat exchanger is not in contact with the heat exchanger. The bar of the support may not be in contact with the heat exchanger. The bar of the support in a path of the heat exchanger may be removed. An adjacent bar may be reinforced on an area on which the bar is removed. The adjacent bar may be provided larger than the other bar, or its strength may be reinforced by a separate member. The radiation resistance sheet may have a removed area in which at least a portion of the area in which the heat exchanger is placed is removed. At least a portion of the pipe may pass through the removed area. At least a portion of the pipe may pass through an unremoved area on which the radiation resistance sheet is not removed.

### ADVANTAGEOUS EFFECTS

According to the present invention, the vacuum adiabatic body having the high adiabatic efficiency may be proposed.

According to the present invention, the vacuum adiabatic body may be conveniently manufactured.

The effects of the present invention are disclosed in more detail in [Specific details for carrying out the invention].

### BRIEF DESCRIPTION OF THE DRAWINGS

Fig. 1 is a perspective view of a refrigerator according to an embodiment.
Fig. 2 is a view schematically illustrating a vacuum adiabatic body used in a main body and a door of the refrigerator.
Fig. 3 is a view illustrating an example of a support that maintains a vacuum space.
Fig. 4 is a view for explaining an example of the vacuum with respect to a heat transfer resistor.
Fig. 5 is a graph illustrating results obtained by observing a process of exhausting the inside of the vacuum adiabatic body with a time and pressure when the support is used.
Fig. 6 is a graph illustrating results obtained by comparing a vacuum pressure to gas conductivity.
Fig. 7 is a view for explaining a method for manufacturing a vacuum adiabatic body.
FIG. 8 is a view illustrating an example in which a support and a heat exchanger are installed.
FIG. 9 is a view illustrating an example in which a support and a heat exchanger are installed.
FIG. 10 is a view illustrating a state in which the heat exchanger is seated on a rear surface of a second plate.
FIG. 11 is a view illustrating a state in which a support is seated on the other surface except for the rear surface.
FIG. 12 is a view illustrating a state in which a first plate is seated.
FIG. 13 is a view illustrating a configuration of preventing the support disposed on the other surface from falling over.
FIG. 14 is a view illustrating any edge of a vacuum adiabatic body.
FIG. 15 is a view of a support inserted into a third space.
FIG. 16 is a view illustrating a state in which each support is separated.
FIG. 17 is a view for explaining detailed configurations of the heat exchanger.
FIG. 18 is a side view illustrating a relationship between the mounting of the support and the plate in sequence.
FIG. 19 is an auxiliary view of FIG. 18.
FIG. 20 is a view illustrating an example of supporting between adjacent supports.
FIG. 21 is a view illustrating a state in which the first plate is mounted.
FIG. 22 is a view for explaining a sealing terminal and a position of a second terminal according to various embodiments.
FIG. 23 is a view illustrating a relationship between the support and the heat exchanger according to an embodiment.
FIG. 24 is a view illustrating a relationship between the support and the heat exchanger according to an embodiment.
FIG. 25 is a view illustrating a relationship between the support and the heat exchanger according to an embodiment.
FIG. 26 is a view illustrating a relationship between the support and the heat exchanger according to an embodiment.
FIG. 27 is a view illustrating a relationship between the support and the heat exchanger according to an embodiment.
FIG. 28 is a view illustrating a relationship between the heat exchanger and the plate according to an embodiment.
FIG. 29 is a view illustrating a relationship between the support, a radiation resistance sheet, and the heat exchanger.
FIG. 30 is a view for explaining an operation related to a refrigerant flow in the heat exchanger.
FIG. 31 is a view illustrating an arrangement of the heat exchanger, the radiation resistance sheet, and the support.
FIG. 32 is a view illustrating an arrangement of a vacuum space of the heat exchanger.
FIG. 33 is a cutaway perspective view of a first terminal.
FIG. 34 is a cross-sectional view illustrating a peripheral portion of the first terminal.
FIG. 35 is a cross-sectional view of a sealing terminal.
FIG. 36 is a plan view illustrating a peripheral portion of a second terminal.
FIG. 37 is a cross-sectional view illustrating the peripheral portion of the second terminal.
FIG. 38 is a perspective view illustrating the peripheral portion of the second terminal.
FIG. 39 is a view for explaining details of withdrawal of an end portion of the heat exchanger.
FIG. 40 is a view illustrating a case in which a pipe of the heat exchanger is disposed in a lattice.
FIG. 41 is a view illustrating sealing of the pipe and the plate according to an embodiment.
FIG. 42 is a cross-sectional view of one-side joint.
FIG. 43 is a view illustrating bonding of the end portion of the heat exchanger and a connection pipe.
FIG. 44 is a view illustrating a state of the vacuum adiabatic body before and after brazing.
FIG. 45 is a view illustrating a relationship between the end portion of the heat exchanger, the support, and the radiation resistance sheet.

### MODE FOR CARRYING OUT THE INVENTION

Hereinafter, specific embodiments will be described in detail with reference to the accompanying drawings. The invention may, however, be embodied in many different forms and should not be construed as being limited to the embodiments set forth herein, and a person of ordinary skill in the art, who understands the spirit of the present invention, may readily implement other embodiments included within the scope of the same concept by adding, changing, deleting, and adding components; rather, it will be understood that they are also included within the scope of the present invention.

The present invention may have many embodiments in which the idea is implemented, and in each embodiment, any portion may be replaced with a corresponding portion or a portion having a related action according to another embodiment. The present invention may be any one of the examples presented below or a combination of two or more examples.

The present disclosure may be a vacuum adiabatic body including a first plate; a second plate; and a vacuum space provided between the first and second plates. The vacuum adiabatic body may include a sealing part for providing the vacuum state space (vacuum space). The vacuum space may be a space in a vacuum state provided in an internal space between the first plate and the second plate. The seal may seal the first plate and the second plate to provide the internal space provided in the vacuum state. The vacuum adiabatic body may optionally include a side plate connecting the first plate to the second plate. In the present disclosure, the expression "plate" may mean at least one of the first and second plates or the side plate. At least a portion of the first and second plates and the side plate may be integrally provided, or at least portions may be sealed to each other. Optionally, the vacuum adiabatic body may include a support that maintains the vacuum space. The vacuum adiabatic body may selectively include a thermal insulator that reduces an amount of heat transfer between a first space provided in vicinity of the first plate and a second space provided in vicinity of the second plate or reduces an amount of heat transfer between the first plate and the second plate.

Optionally, the vacuum adiabatic body may include a component coupling portion provided on at least a portion of the plate. Optionally, the vacuum adiabatic body may include another adiabatic body. Another adiabatic body may be provided to be connected to the vacuum adiabatic body. Another adiabatic body may be an adiabatic body having a degree of vacuum, which is equal to or different from a degree of vacuum of the vacuum adiabatic body. Another adiabatic body may be an adiabatic body that does not include a degree of vacuum less than that of the vacuum adiabatic body or a portion that is in a vacuum state therein. In this case, it may be advantageous to connect another object to another adiabatic body.

In the present disclosure, a direction along a wall defining the vacuum space may include a longitudinal direction of the vacuum space and a height direction of the vacuum space. The height direction of the vacuum space may be defined as any one direction among virtual lines connecting the first space to the second space to be described later while passing through the vacuum space. The longitudinal direction of the vacuum space may be defined as a direction perpendicular to the set height direction of the vacuum space.

In the present disclosure, that an object A is connected to an object B means that at least a portion of the object A and at least a portion of the object B are directly connected to each other, or that at least a portion of the object A and at least a portion of the object B are connected to each other through an intermedium interposed between the objects A and B. The intermedium may be provided on at least one of the object A or the object B. The connection may include that the object A is connected to the intermedium, and the intermedium is connected to the object B.

A portion of the intermedium may include a portion connected to either one of the object A and the object B. The other portion of the intermedium may include a portion connected to the other of the object A and the object B. As a modified example, the connection of the object A to the object B may include that the object A and the object B are integrally prepared in a shape connected in the above-described manner. In the present disclosure, an embodiment of the connection may be support, combine, or a seal, which will be described later.

In the present disclosure, that the object A is supported by the object B means that the object A is restricted in movement by the object B in one or more of the +X, -X, +Y, -Y, +Z, and -Z axis directions. In the present invention, an embodiment of the support may be the combine or seal, which will be described later. In the present invention, that the object A is combined with the object B may define that the object A is restricted in movement by the object B in one or more of the X, Y, and Z-axis directions.

In the present disclosure, an embodiment of the combining may be the sealing to be described later. In the present disclosure, that the object A is sealed to the object B may define a state in which movement of a fluid is not allowed at the portion at which the object A and the object B are connected. In the present disclosure, one or more objects, i.e., at least a portion of the object A and the object B, may be defined as including a portion of the object A, the whole of the object A, a portion of the object B, the whole of the object B, a portion of the object A and a portion of the object B, a portion of the object A and the whole of the object B, the whole of the object A and a portion of the object B, and the whole of the object A and the whole of the object B. In the present disclosure, that the plate A may be a wall defining the space A may be defined as that at least a portion of the plate A may be a wall defining at least a portion of the space A. That is, at least a portion of the plate A may be a wall forming the space A, or the plate A may be a wall forming at least a portion of the space A. In the present disclosure, a central portion of the object may be defined as a central portion among three divided portions when the object is divided into three sections based on the longitudinal direction of the object. A periphery of the object may be defined as a portion disposed at a left or right side of the central portion among the three divided portions. The periphery of the object may include a surface that is in contact with the central portion and a surface opposite thereto. The opposite side may be defined as a border or edge of the object. Examples of the object may include a vacuum adiabatic body, a plate, a heat transfer resistor, a support, a vacuum space, and various components to be introduced in the present disclosure. In the present disclosure, a degree of heat transfer resistance may indicate a degree to which an object resists heat transfer and may be defined as a value determined by a shape including a thickness of the object, a material of the object, and a processing method of the object. The degree of the heat transfer resistance may be defined as the sum of a degree of conduction resistance, a degree of radiation resistance, and a degree of convection resistance.

The vacuum adiabatic body according to the present disclosure may include a heat transfer path defined between spaces having different temperatures, or a heat transfer path defined between plates having different temperatures. For example, the vacuum adiabatic body according to the present disclosure may include a heat transfer path through which cold is transferred from a low-temperature plate to a high-temperature plate. In the present disclosure, when a curved portion includes a first portion extending in a first direction and a second portion extending in a second direction different from the first direction, the curved portion may be defined as a portion that connects the first portion to the second portion (including 90 degrees).

In the present disclosure, the vacuum adiabatic body may optionally include a component coupling portion. The component coupling portion may be defined as a portion provided on the plate to which components are connected to each other. The component connected to the plate may be defined as a penetration portion disposed to pass through at least a portion of the plate and a surface component disposed to be connected to a surface of at least a portion of the plate.

At least one of the penetration component or the surface component may be connected to the component coupling portion. The penetration component may be a component that defines a path through which a fluid (electricity, refrigerant, water, air, etc.) passes mainly. In the present disclosure, the fluid is defined as any kind of flowing material. The fluid includes moving solids, liquids, gases, and electricity. For example, the component may be a component that defines a path through which a refrigerant for heat exchange passes, such as a suction line heat exchanger (SLHX) or a refrigerant tube.

The component may be an electric wire that supplies electricity to an apparatus. As another example, the component may be a component that defines a path through which air passes, such as a cold duct, a hot air duct, and an exhaust port. As another example, the component may be a path through which a fluid such as coolant, hot water, ice, and defrost water pass. The surface component may include at least one of a peripheral adiabatic body, a side panel, injected foam, a pre-prepared resin, a hinge, a latch, a basket, a drawer, a shelf, a light, a sensor, an evaporator, a front decor, a hotline, a heater, an exterior cover, or another adiabatic body.

As an example to which the vacuum adiabatic body is applied, the present disclosure may include an apparatus having the vacuum adiabatic body. Examples of the apparatus may include an appliance. Examples of the appliance may include home appliances including a refrigerator, a cooking appliance, a washing machine, a dishwasher, and an air conditioner, etc. As an example in which the vacuum adiabatic body is applied to the apparatus, the vacuum adiabatic body may constitute at least a portion of a body and a door of the apparatus.

As an example of the door, the vacuum adiabatic body may constitute at least a portion of a general door and a door-in-door (DID) that is in direct contact with the body. Here, the door-in-door may mean a small door placed inside the general door. As another example to which the vacuum adiabatic body is applied, the present disclosure may include a wall having the vacuum adiabatic body. Examples of the wall may include a wall of a building, which includes a window.

Hereinafter, the present disclosure will be described in detail with reference to the accompanying drawings. Each of the drawings accompanying the embodiment may be different from, exaggerated, or simply indicated from an actual article, and detailed components may be indicated with simplified features. The embodiment should not be interpreted as being limited only to the size, structure, and shape presented in the drawings. In the embodiments accompanying each of the drawings, unless the descriptions conflict with each other, some configurations in the drawings of one embodiment may be applied to some configurations of the drawings in another embodiment, and some structures in one embodiment may be applied to some structures in another embodiment.

In the description of the drawings for the embodiment, the same reference numerals may be assigned to different drawings as reference numerals of specific components constituting the embodiment. Components having the same reference number may perform the same function. For example, the first plate constituting the vacuum adiabatic body has a portion corresponding to the first space throughout all embodiments and is indicated by reference number 10. The first plate may have the same number for all embodiments and may have a portion corresponding to the first space, but the shape of the first plate may be different in each embodiment. Not only the first plate, but also the side plate, the second plate, and another adiabatic body may be understood as well.

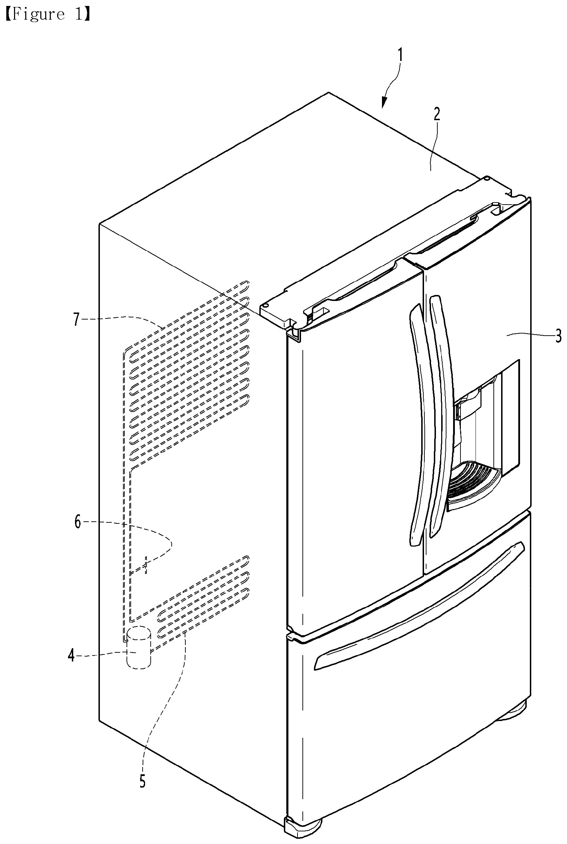

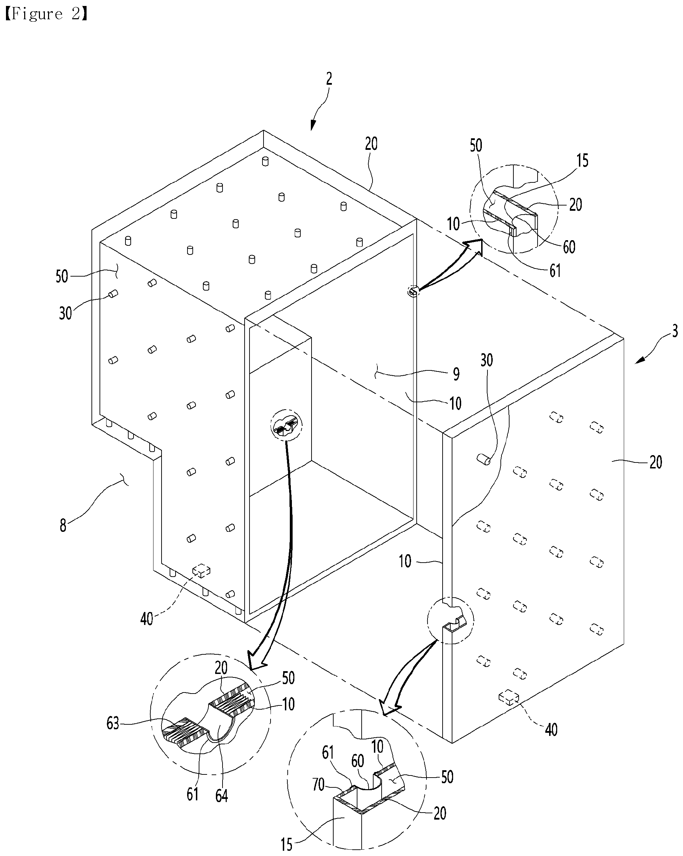

Fig. 1 is a perspective view of a refrigerator according to an embodiment, and FIG. 2 is a schematic view illustrating a vacuum adiabatic body used for a body and a door of the refrigerator. Referring to Fig. 1, the refrigerator 1 includes a main body 2 provided with a cavity 9 capable of storing storage goods and a door 3 provided to open and close the main body 2.

The door 3 may be rotatably or slidably disposed to open or close the cavity 9. The cavity 9 may provide at least one of a refrigerating compartment and a freezing compartment.

A cold source that supplies cold to the cavity may be provided. For example, the cold source may be an evaporator 7 that evaporates the refrigerant to take heat. The evaporator 7 may be connected to a compressor 4 that compresses the refrigerant evaporated to the cold source. The evaporator 7 may be connected to a condenser 5 that condenses the compressed refrigerant to the cold source. The evaporator 7 may be connected to an expander 6 that expands the refrigerant condensed in the cold source.

A fan corresponding to the evaporator and the condenser may be provided to promote heat exchange. As another example, the cold source may be a heat absorption surface of a thermoelectric element. A heat absorption sink may be connected to the heat absorption surface of the thermoelectric element. A heat sink may be connected to a heat radiation surface of the thermoelectric element. A fan corresponding to the heat absorption surface and the heat generation surface may be provided to promote heat exchange.

Referring to FIG. 2, plates 10, 15, and 20 may be walls defining the vacuum space. The plates may be walls that partition the vacuum space from an external space of the vacuum space. An example of the plates is as follows. The present disclosure may be any one of the following examples or a combination of two or more examples.

The plate may be provided as one portion or may be provided to include at least two portions connected to each other.

As a first example, the plate may include at least two portions connected to each other in a direction along a wall defining the vacuum space. Any one of the two portions may include a portion (e.g., a first portion) defining the vacuum space. The first portion may be a single portion or may include at least two portions that are sealed to each other. The other one of the two portions may include a portion (e.g., a second portion) extending from the first portion of the first plate in a direction away from the vacuum space or extending in an inner direction of the vacuum space.

As a second example, the plate may include at least two layers connected to each other in a thickness direction of the plate. Any one of the two layers may include a layer (e.g., the first portion) defining the vacuum space. The other one of the two layers may include a portion (e.g., the second portion) provided in an external space (e.g., a first space and a second space) of the vacuum space.

In this case, the second portion may be defined as an outer cover of the plate. The other one of the two layers may include a portion (e.g., the second portion) provided in the vacuum space. In this case, the second portion may be defined as an inner cover of the plate.

The plate may include a first plate 10 and a second plate 20. One surface of the first plate (the inner surface of the first plate) provides a wall defining the vacuum space, and the other surface (the outer surface of the first plate) of the first plate A wall defining the first space may be provided. The first space may be a space provided in the vicinity of the first plate, a space defined by the apparatus, or an internal space of the apparatus. In this case, the first plate may be referred to as an inner case. When the first plate and the additional member define the internal space, the first plate and the additional member may be referred to as an inner case.

The inner case may include two or more layers. In this case, one of the plurality of layers may be referred to as an inner panel. One surface of the second plate (the inner surface of the second plate) provides a wall defining the vacuum space, and the other surface (the outer surface of the first plate) of the second plate A wall defining the second space may be provided. The second space may be a space provided in vicinity of the second plate, another space defined by the apparatus, or an external space of the apparatus. In this case, the second plate may be referred to as an outer case. When the second plate and the additional member define the external space, the second plate and the additional member may be referred to as an outer case. The outer case may include two or more layers. In this case, one of the plurality of layers may be referred to as an outer panel.

The second space may be a space having a temperature higher than that of the first space or a space having a temperature lower than that of the first space. Optionally, the plate may include a side plate 15. In FIG. 2, the side plate may also perform a function of a conductive resistance sheet 60 to be described later, according to the disposition of the side plate. The side plate may include a portion extending in a height direction of a space defined between the first plate and the second plate.

The side plate may include a portion extending in a height direction of the vacuum space.

One surface of the side plate may provide a wall defining the vacuum space, and the other surface of the side plate may provide a wall defining an external space of the vacuum space. The external space of the vacuum space may be at least one of the first space or the second space or a space in which another adiabatic body to be described later is disposed. The side plate may be integrally provided by extending at least one of the first plate or the second plate or a separate component connected to at least one of the first plate or the second plate.

The plate may optionally include a curved portion. In the present disclosure, the plate including a curved portion may be referred to as a bent plate. The curved portion may include at least one of the first plate, the second plate, the side plate, between the first plate and the second plate, between the first plate and the side plate, or between the second plate and the side plate. The plate may include at least one of a first curved portion or a second curved portion, an example of which is as follows.

First, the side plate may include the first curved portion. A portion of the first curved portion may include a portion connected to the first plate. Another portion of the first curved portion may include a portion connected to the second curved portion. In this case, a curvature radius of each of the first curved portion and the second curved portion may be large. The other portion of the first curved portion may be connected to an additional straight portion or an additional curved portion, which are provided between the first curved portion and the second curved portion. In this case, a curvature radius of each of the first curved portion and the second curved portion may be small.

Second, the side plate may include the second curved portion. A portion of the second curved portion may include a portion connected to the second plate. The other portion of the second curved portion may include a portion connected to the first curved portion. In this case, a curvature radius of each of the first curved portion and the second curved portion may be large. The other portion of the second curved portion may be connected to an additional straight portion or an additional curved portion, which are provided between the first curved portion and the second curved portion. In this case, a curvature radius of each of the first curved portion and the second curved portion may be small. Here, the straight portion may be defined as a portion having a curvature radius greater than that of the curved portion. The straight portion may be understood as a portion having a perfect plane or a curvature radius greater than that of the curved portion. Third, the first plate may include the first curved portion. A portion of the first curved portion may include a portion connected to the side plate. A portion connected to the side plate may be provided at a position that is away from the second plate at a portion at which the first plate extends in the longitudinal direction of the vacuum space.

Fourth, the second plate may include the second curved portion. A portion of the second curved portion may include a portion connected to the side plate. A portion connected to the side plate may be provided at a position that is away from the first plate at a portion at which the second plate extends in the longitudinal direction of the vacuum space. The present disclosure may include a combination of any one of the first and second examples described above and any one of the third and fourth examples described above.

In the present disclosure, the vacuum space 50 may be defined as a third space. The vacuum space may be a space in which a vacuum pressure is maintained. In the present disclosure, the expression that a vacuum degree of A is higher than that of B means that a vacuum pressure of A is lower than that of B.

In the present disclosure, the seal 61 may be a portion provided between the first plate and the second plate. Examples of sealing are as follows. The present disclosure may be any one of the following examples or a combination of two or more examples. The sealing may include fusion welding for coupling the plurality of objects by melting at least a portion of the plurality of objects. For example, the first plate and the second plate may be welded by laser welding in a state in which a melting bond such as a filler metal is not interposed therebetween, a portion of the first and second plates and a portion of the component coupling portion may be welded by high-frequency brazing or the like, or a plurality of objects may be welded by a melting bond that generates heat. The sealing may include pressure welding for coupling the plurality of objects by a mechanical pressure applied to at least a portion of the plurality of objects.

For example, as a component connected to the component coupling portion, an object made of a material having a degree of deformation resistance less than that of the plate may be pressure-welded by a method such as pinch-off.

A machine room 8 may be optionally provided outside the vacuum adiabatic body. The machine room may be defined as a space in which components connected to the cold source are accommodated. Optionally, the vacuum adiabatic body may include a port 40. The port may be provided at any one side of the vacuum adiabatic body to discharge air of the vacuum space 50.

Optionally, the vacuum adiabatic body may include a conduit 64 passing through the vacuum space 50 to install components connected to the first space and the second space.

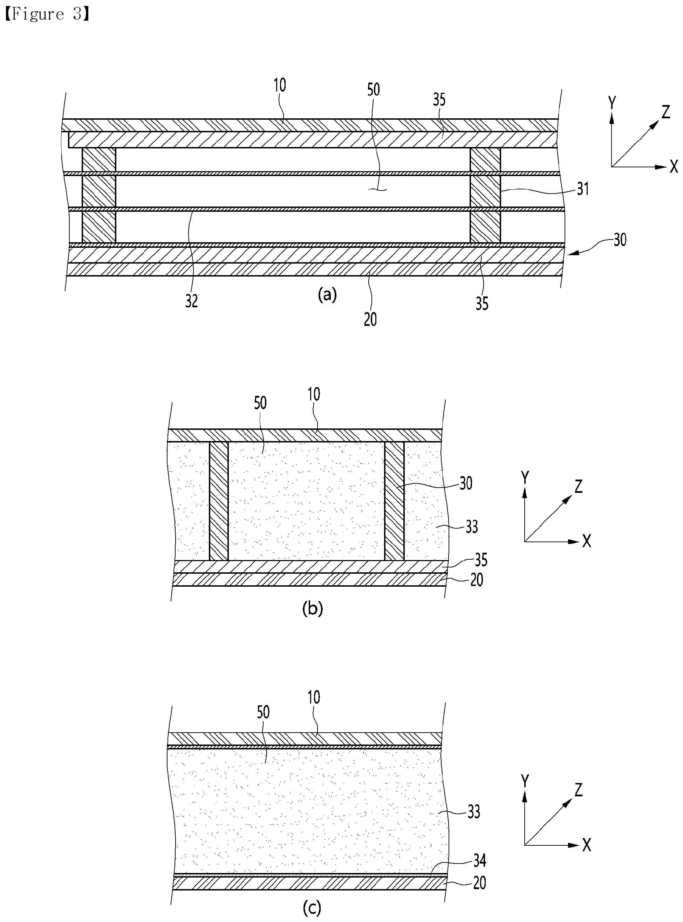

Fig. 3 is a view illustrating an example of a support that maintains the vacuum space. An example of the support is as follows. The present disclosure may be any one of the following examples or a combination of two or more examples.

The supports 30, 31, 33, and 35 may be provided to support at least a portion of the plate and a heat transfer resistor to be described later, thereby reducing deformation of at least some of the vacuum space 50, the plate, and the heat transfer resistor to be described later due to external force.

The external force may include at least one of a vacuum pressure or external force excluding the vacuum pressure. When the deformation occurs in a direction in which a height of the vacuum space is lower, the support may reduce an increase in at least one of radiant heat conduction, gas heat conduction, surface heat conduction, or support heat conduction, which will be described later.

The support may be an object provided to maintain a gap between the first plate and the second plate or an object provided to support the heat transfer resistor. The support may have a degree of deformation resistance greater than that of the plate or be provided to a portion having weak degree of deformation resistance among portions constituting the vacuum adiabatic body, the apparatus having the vacuum adiabatic body, and the wall having the vacuum adiabatic body.

According to an embodiment, a degree of deformation resistance represents a degree to which an object resists deformation due to external force applied to the object and is a value determined by a shape including a thickness of the object, a material of the object, a processing method of the object, and the like. Examples of the portions having the weak degree of deformation resistance include the vicinity of the curved portion defined by the plate, at least a portion of the curved portion, the vicinity of an opening defined in the body of the apparatus, which is provided by the plate, or at least a portion of the opening.

The support may be disposed to surround at least a portion of the curved portion or the opening or may be provided to correspond to the shape of the curved portion or the opening. However, it is not excluded that the support is provided in other portions. The opening may be understood as a portion of the apparatus including the body and the door capable of opening or closing the opening defined in the body. An example in which the support is provided to support the plate is as follows. First, at least a portion of the support may be provided in a space defined inside the plate. The plate may include a portion including a plurality of layers, and the support may be provided between the plurality of layers. Optionally, the support may be provided to be connected to at least a portion of the plurality of layers or be provided to support at least a portion of the plurality of layers.

Second, at least a portion of the support may be provided to be connected to a surface defined on the outside of the plate. The support may be provided in the vacuum space or an external space of the vacuum space. For example, the plate may include a plurality of layers, and the support may be provided as any one of the plurality of layers. Optionally, the support may be provided to support the other one of the plurality of layers. For example, the plate may include a plurality of portions extending in the longitudinal direction, and the support may be provided as any one of the plurality of portions.

Optionally, the support may be provided to support the other one of the plurality of parts. As further another example, the support may be provided in the vacuum space or the external space of the vacuum space as a separate component, which is distinguished from the plate. Optionally, the support may be provided to support at least a portion of a surface defined on the outside of the plate. Optionally, the support may be provided to support one surface of the first plate and one surface of the second plate.

One surface of the first plate and one surface of the second plate may be provided to face each other.

Third, the support may be provided to be integrated with the plate. An example in which the support is provided to support the heat transfer resistor may be understood instead of the example in which the support is provided to support the plate. A duplicated description will be omitted.

An example of the support in which heat transfer through the support is designed to be reduced is as follows. First, at least a portion of the components disposed in the vicinity of the support may be provided so as not to be in contact with the support or provided in an empty space provided by the support. Examples of the components include a tube or component connected to the heat transfer resistor to be described later, an exhaust port, a getter port, a tube or component passing through the vacuum space, or a tube or component of which at least a portion is disposed in the vacuum space.

Exampled of the tube may include the exhaust port, a getter port. Examples of the empty space may include an empty space provided in the support, an empty space provided between the plurality of supports, and an empty space provided between the support and a separate component that is distinguished from the support.

Optionally, at least a portion of the component may be disposed in a through-hole defined in the support, be disposed between the plurality of bars, be disposed between the plurality of connection plates, or be disposed between the plurality of support plates. Optionally, at least a portion of the component may be disposed in a spaced space between the plurality bars, be disposed in a spaced space between the plurality of connection plates, or be disposed in a spaced space between the plurality of support plates. Second, the adiabatic body may be provided on at least a portion of the support or in the vicinity of at least a portion of the support.

The adiabatic body may be provided to be in contact with the support or provided so as not to be in contact with the support. The adiabatic body may be provided at a portion in which the support and the plate are in contact with each other. The adiabatic body may be provided on at least a portion of one surface and the other surface of the support or be provided to cover at least a portion of one surface and the other surface of the support. The adiabatic body may be provided on at least a portion of a periphery of one surface and a periphery of the other surface of the support or be provided to cover at least a portion of a periphery of one surface and a periphery of the other surface of the support.

The support may include a plurality of bars. The adiabatic body may be disposed on an area from a point at which any one of the plurality of bars is disposed to a midpoint between the one bar and the surrounding bars. Third, when cold is transferred through the support, a heat source may be disposed at a position at which the heat adiabatic body described in the second example is disposed. When a temperature of the first space is lower than a temperature of the second space, the heat source may be disposed on the second plate or in the vicinity of the second plate. When heat is transmitted through the support, a cold source may be disposed at a position at which the heat adiabatic body described in the second example is disposed.

When a temperature of the first space is higher than a temperature of the second space, the cold source may be disposed on the second plate or in the vicinity of the second plate. As fourth example, the support may include a portion having heat transfer resistance higher than a metal or a portion having heat transfer resistance higher than the plate. The support may include a portion having heat transfer resistance less than that of another adiabatic body.

The support may include at least one of a non-metal material, PPS, and glass fiber (GF), low outgassing PC, PPS, or LCP. This is done for a reason in which high compressive strength, low outgassing, and a water absorption rate, low thermal conductivity, high compressive strength at a high temperature, and excellent workability are being capable of obtained.

Examples of the support may be the bars 30 and 31, the connection plate 35, the support plate 35, a porous material 33, and a filler 33. In this embodiment, the support may include any one of the above examples, or an example in which at least two examples are combined.

As first example, the support may include bars 30 and 31. The bar may include a portion extending in a direction in which the first plate and the second plate are connected to each other to support a gap between the first plate and the second plate. The bar may include a portion extending in a height direction of the vacuum space and a portion extending in a direction that is substantially perpendicular to the direction in which the plate extends. The bar may be provided to support only one of the first plate and the second plate or may be provided both the first plate and the second plate.

For example, one surface of the bar may be provided to support a portion of the plate. the other surface of the bar may be provided so as not to be in contact with the other portion of the plate. As another example, one surface of the bar may be provided to support at least a portion of the plate. the other surface of the bar may be provided to support the other portion of the plate.

The support may include a bar having an empty space therein or a plurality of bars, and an empty space are provided between the plurality of bars. In addition, the support may include a bar, and the bar may be disposed to provide an empty space between the bar and a separate component that is distinguished from the bar.

The support may selectively include a connection plate 35 including a portion connected to the bar or a portion connecting the plurality of bars to each other. The connection plate may include a portion extending in the longitudinal direction of the vacuum space or a portion extending in the direction in which the plate extends. An XZ-plane cross-sectional area of the connection plate may be greater than an XZ-plane cross-sectional area of the bar. The connection plate may be provided on at least one of one surface and the other surface of the bar or may be provided between one surface and the other surface of the bar.

At least one of one surface and the other surface of the bar may be a surface on which the bar supports the plate. The shape of the connection plate is not limited. The support may include a connection plate having an empty space therein or a plurality of connection plates. An empty space may be provided between the plurality of connection plates. In addition, the support may include a connection plate.

The connection plate may be disposed to provide an empty space between the connection plate and a separate component that is distinguished from the connection plate. As a second example, the support may include a support plate 35. The support plate may include a portion extending in the longitudinal direction of the vacuum space or a portion extending in the direction in which the plate extends. The support plate may be provided to support only one of the first plate and second plate.

The support plate may be provided to support both the first plate and the second plate. For example, one surface of the support plate may be provided to support a portion of the plate, and the other surface of the support plate may be provided so as not to be in contact with the other portion of the plate. As another example, one surface of the support plate may be provided to support at least a portion of the plate, and the other surface of the support plate may be provided to support the other portion of the plate. A cross-sectional shape of the support plate is not limited.

The support may include a support plate having an empty space therein or a plurality of support plates, and an empty space are provided between the plurality of support plates. In addition, the support may include a support plate, and the support plate may be disposed to provide an empty space between the support plate and a separate component that is distinguished from the support plate.

As a third example, the support may include a porous material 33 or a filler 33. The inside of the vacuum space may be supported by the porous material or the filler. The inside of the vacuum space may be completely filled by the porous material or the filler. The support may include a plurality of porous materials or a plurality of fillers. The plurality of porous materials or the plurality of fillers may be disposed to be in contact with each other.

When an empty space is provided inside the porous material, provided between the plurality of porous materials, or provided between the porous material and a separate component that is distinguished from the porous material, the porous material may be understood as including any one of the aforementioned bar, connection plate, and support plate.

When an empty space is provided inside the filler, provided between the plurality of fillers, or provided between the filler and a separate component that is distinguished from the filler, the filler may be understood as including any one of the aforementioned bar, connection plate, and support plate. The support according to the present disclosure may include any one of the above examples or an example in which two or more examples are combined.

Referring to Fig. 3a, as an embodiment, the support may include a bar 31 and a connection plate and support plate 35. The connection plate and the supporting plate may be designed separately. Referring to Fig. 3b, as an embodiment, the support may include a bar 31, a connection plate and support plate 35, and a porous material 33 filled in the vacuum space. The porous material 33 may have emissivity greater than that of stainless steel, which is a material of the plate, but since the vacuum space is filled, resistance efficiency of radiant heat transfer is high.

The porous material may also function as a heat transfer resistor to be described later. More preferably, the porous material may perform a function of a radiation resistance sheet to be described later. Referring to Fig. 3c, as an embodiment, the support may include a porous material 33 or a filler 33. The porous material 33 and the filler may be provided in a compressed state to maintain a gap between the vacuum space.

The film 34 may be provided in a state in which a hole is punched as, for example, a PE material. The porous material 33 or the filler may perform both a function of the heat transfer resistor and a function of the support, which will be described later. More preferably, the porous material may perform both a function of the radiation resistance sheet and a function of the support to be described later.

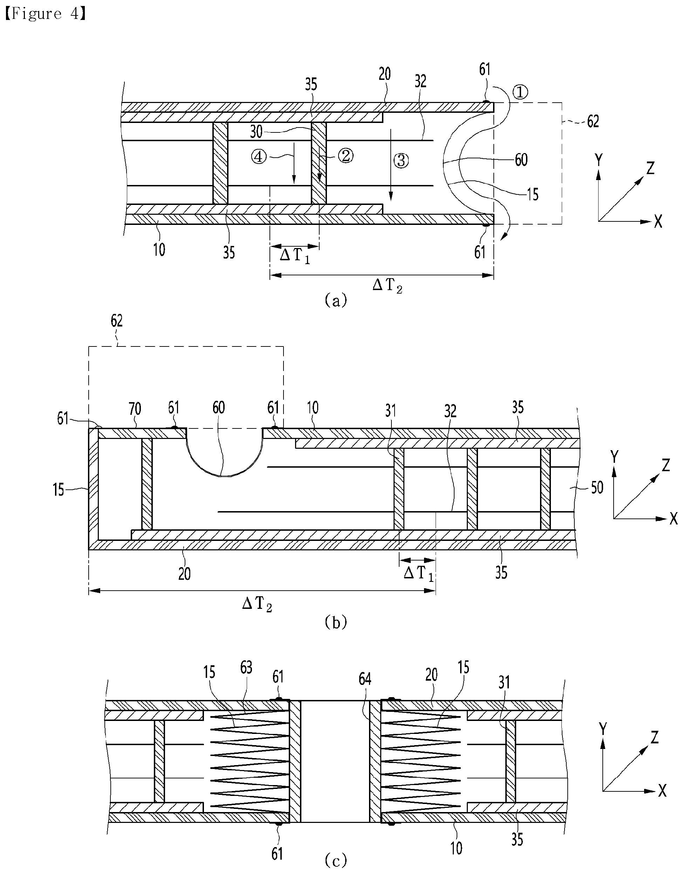

Fig. 4 is a view for explaining an example of the vacuum adiabatic body based on heat transfer resistors 32, 33, 60, and 63 (e.g., thermal insulator and a heat transfer resistance body). The vacuum adiabatic body according to the present disclosure may optionally include a heat transfer resistor. An example of the heat transfer resistor is as follows. The present disclosure may be any one of the following examples or a combination of two or more examples.

The heat transfer resistors 32, 33, 60, and 63 may be objects that reduce an amount of heat transfer between the first space and the second space or objects that reduce an amount of heat transfer between the first plate and the second plate. The heat transfer resistor may be disposed on a heat transfer path defined between the first space and the second space. The heat transfer resistor may be disposed on a heat transfer path formed between the first plate and the second plate. The heat transfer resistor may include a portion extending in a direction along a wall defining the vacuum space.

The heat transfer resistor may include a portion extending in a direction in which the plate extends. Optionally, the heat transfer resistor may include a portion extending from the plate in a direction away from the vacuum space. The heat transfer resistor may be provided on at least a portion of the periphery of the first plate or the periphery of the second plate.

The heat transfer resistor may be provided on at least a portion of an edge of the first plate or an edge of the second plate. The heat transfer resistor may be provided at a portion, in which the through-hole is defined. The heat transfer resistor may be provided as a tube connected to the through-hole. A separate tube or a separate component that is distinguished from the tube may be disposed inside the tube.

Exampled of the aforementioned tube may include the exhaust port, a getter port The heat transfer resistor may include a portion having heat transfer resistance greater than that of the plate. In this case, adiabatic performance of the vacuum adiabatic body may be further improved. A shield 62 may be provided on the outside of the heat transfer resistor to be insulated. The inside of the heat transfer resistor may be insulated by the vacuum space. The shield may be provided as a porous material or a filler that is in contact with the inside of the heat transfer resistor.

The shield may be an adiabatic structure that is exemplified by a separate gasket placed outside the inside of the heat transfer resistor. The heat transfer resistor may be a wall defining the third space.

An example in which the heat transfer resistor is connected to the plate may be understood as replacing the support with the heat transfer resistor in an example in which the support is provided to support the plate. A duplicate description will be omitted. The example in which the heat transfer resistor is connected to the support may be understood as replacing the plate with the support in the example in which the heat transfer resistor is connected to the plate. A duplicate description will be omitted. The example of reducing heat transfer via the heat transfer body may be applied as a substitute the example of reducing the heat transfer via the support, and thus, the same explanation will be omitted.

In the present disclosure, the heat transfer resistor may be one of a radiation resistance sheet 32, a porous material 33, a filler 33, and a conductive resistance sheet. In the present disclosure, the heat transfer resistor may include a combination of at least two of the radiation resistance sheet 32, the porous material 33, the filler 33, and the conductive resistance sheet. As a first example, the heat transfer resistor may include a radiation resistance sheet 32.

The radiation resistance sheet may include a portion having heat transfer resistance greater than that of the plate, and the heat transfer resistance may be a degree of resistance to heat transfer by radiation. The support may perform a function of the radiation resistance sheet together. A conductive resistance sheet to be described later may perform the function of the radiation resistance sheet together. As a second example, the heat transfer resistor may include conduction resistance sheets 60 and 63.

The conductive resistance sheet may include a portion having heat transfer resistance greater than that of the plate, and the heat transfer resistance may be a degree of resistance to heat transfer by conduction. For example, the conductive resistance sheet may have a thickness less than that of at least a portion of the plate. As another example, the conductive resistance sheet may include one end and the other end, and a length of the conductive resistance sheet may be longer than a straight distance connecting one end of the conductive resistance sheet to the other end of the conductive resistance sheet.

As another example, the conductive resistance sheet may include a material having resistance to heat transfer greater than that of the plate by conduction. As another example, the heat transfer resistor may include a portion having a curvature radius less than that of the plate.

Referring to Fig. 4a, for example, a conductive resistance sheet may be provided on a side plate connecting the first plate to the second plate. Referring to Fig. 4b, for example, a conductive resistance sheet 60 may be provided on at least a portion of the first plate and the second plate. A connection frame 70 may be further provided outside the conductive resistance sheet. The connection frame may be a portion from which the first plate or the second plate extends or a portion from which the side plate extends.

Optionally, the connection frame 70 may include a portion at which a component for sealing the door and the body and a component disposed outside the vacuum space such as the exhaust port and the getter port, which are required for the exhaust process, are connected to each other.

Referring to Fig. 4c, for example, a conductive resistance sheet may be provided on a side plate connecting the first plate to the second plate. The conductive resistance sheet may be installed in a through-hole passing through the vacuum space. The conduit 64 may be provided separately outside the conductive resistance sheet. The conductive resistance sheet may be provided in a pleated shape. Through this, the heat transfer path may be lengthened, and deformation due to a pressure difference may be prevented. A separate shielding member for insulating the conductive resistance sheet 63 may also be provided. The conductive resistance sheet may include a portion having a degree of deformation resistance less than that of at least one of the plate, the radiation resistance sheet, or the support. The radiation resistance sheet may include a portion having a degree of deformation resistance less than that of at least one of the plate or the support. The plate may include a portion having a degree of deformation resistance less than that of the support. The conductive resistance sheet may include a portion having conductive heat transfer resistance greater than that of at least one of the plate, the radiation resistance sheet, or the support. The radiation resistance sheet may include a portion having radiation heat transfer resistance greater than that of at least one of the plate, the conductive resistance sheet, or the support. The support may include a portion having heat transfer resistance greater than that of the plate.

For example, at least one of the plate, the conductive resistance sheet, or the connection frame may include stainless steel material, the radiation resistance sheet may include aluminum, and the support may include a resin material.

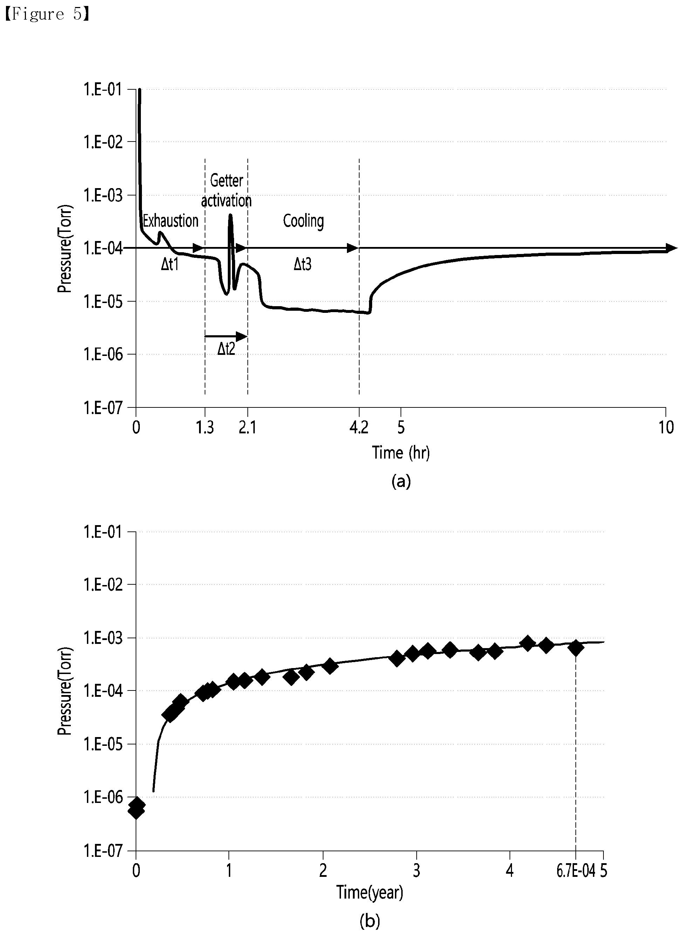

Fig. 5 is a graph for observing a process of exhausting the inside of the vacuum adiabatic body with a time and pressure when the support is used. An example of a vacuum adiabatic body vacuum exhaust process vacuum is as follows. The present disclosure may be any one of the following examples or a combination of two or more examples.

While the exhaust process is being performed, an outgassing process, which is a process in which a gas of the vacuum space is discharged, or a potential gas remaining in the components of the vacuum adiabatic body is discharged, may be performed. As an example of the outgassing process, the exhaust process may include at least one of heating or drying the vacuum adiabatic body, providing a vacuum pressure to the vacuum adiabatic body, or providing a getter to the vacuum adiabatic body. In this case, it is possible to promote the vaporization and exhaust of the potential gas remaining in the component provided in the vacuum space. The exhaust process may include a process of cooling the vacuum adiabatic body. The cooling process may be performed after the process of heating or drying the vacuum adiabatic body is performed. The process of heating or drying the vacuum adiabatic body process of providing the vacuum pressure to the vacuum adiabatic body may be performed together.

The process of heating or drying the vacuum adiabatic body and the process of providing the getter to the vacuum adiabatic body may be performed together. After the process of heating or drying the vacuum adiabatic body is performed, the process of cooling the vacuum adiabatic body may be performed.

The process of providing the vacuum pressure to the vacuum adiabatic body and the process of providing the getter to the vacuum adiabatic body may be performed so as not to overlap each other.

For example, after the process of providing the vacuum pressure to the vacuum adiabatic body is performed, the process of providing the getter to the vacuum adiabatic body may be performed. When the vacuum pressure is provided to the vacuum adiabatic body, a pressure of the vacuum space may drop to a certain level and then no longer drop. Here, after stopping the process of providing the vacuum pressure to the vacuum adiabatic body, the getter may be input. As an example of stopping the process of providing the vacuum pressure to the vacuum adiabatic body, an operation of a vacuum pump connected to the vacuum space may be stopped. When inputting the getter, the process of heating or drying the vacuum adiabatic body may be performed together. Through this, the outgassing may be promoted. As another example, after the process of providing the getter to the vacuum adiabatic body is performed, the process of providing the vacuum pressure to the vacuum adiabatic body may be performed.

The time during which the vacuum adiabatic body vacuum exhaust process is performed may be referred to as a vacuum exhaust time. The vacuum exhaust time includes at least one of a time Δ1 during which the process of heating or drying the vacuum adiabatic body is performed, a time Δt2 during which the process of maintaining the getter in the vacuum adiabatic body is performed, of a time Δt3 during which the process of cooling the vacuum adiabatic body is performed. Examples of times Δt1, Δt2, and Δt3 are as follows. The present disclosure may be any one of the following examples or a combination of two or more examples. In the vacuum adiabatic body vacuum exhaust process, the time Δt1 may be a time t1a or more and a time t1b or less. As a first example, the time t1a may be greater than or equal to about 0.2 hr and less than or equal to about 0.5 hr. The time t1b may be greater than or equal to about 1 hr and less than or equal to about 24.0 hr.

The time Δt1 may be about 0.3 hr or more and about 12.0 hr or less. The time Δt1 may be about 0.4 hr or more and about 8.0 hr or less. The time Δt1 may be about 0.5 hr or more and about 4.0 hr or less. In this case, even if the Δt1 is kept as short as possible, the sufficient outgassing may be applied to the vacuum adiabatic body. For example, this case may include a case in which a component of the vacuum adiabatic body, which is exposed to the vacuum space, among the components of the vacuum adiabatic body, has an outgassing rate (%) less than that of any one of the component of the vacuum adiabatic body, which is exposed to the external space of the vacuum space. Specifically, the component exposed to the vacuum space may include a portion having a outgassing rate less than that of a thermoplastic polymer.

More specifically, the support or the radiation resistance sheet may be disposed in the vacuum space, and the outgassing rate of the support may be less than that of the thermoplastic plastic. As another example, this case may include a case in which a component of the vacuum adiabatic body, which is exposed to the vacuum space, among the components of the vacuum adiabatic body, has a max operating temperature (°C) greater than that of any one of the component of the vacuum adiabatic body, which is exposed to the external space of the vacuum space.

In this case, the vacuum adiabatic body may be heated to a higher temperature to increase in outgassing rate. For example, the component exposed to the vacuum space may include a portion having an operating temperature greater than that of the thermoplastic polymer. As a more specific example, the support or the radiation resistance sheet may be disposed in the vacuum space, and a use temperature of the support may be higher than that of the thermoplastic plastic.

As another example, among the components of the vacuum adiabatic body, the component exposed to the vacuum space may contain more metallic portion than a non-metallic portion. That is, a mass of the metallic portion may be greater than a mass of the non-metallic portion, a volume of the metallic portion may be greater than a volume of the non-metallic portion, or an area of the metallic portion exposed to the vacuum space may be greater than an area exposed to the non-metallic portion of the vacuum space. When the components exposed to the vacuum space are provided in plurality, the sum of the volume of the metal material included in the first component and the volume of the metal material included in the second component may be greater than that of the volume of the non-metal material included in the first component and the volume of the non-metal material included in the second component. When the components exposed to the vacuum space are provided in plurality, the sum of the mass of the metal material included in the first component and the mass of the metal material included in the second component may be greater than that of the mass of the non-metal material included in the first component and the mass of the non-metal material included in the second component. When the components exposed to the vacuum space are provided in plurality, the sum of the area of the metal material, which is exposed to the vacuum space and included in the first component, and an area of the metal material, which is exposed to the vacuum space and included in the second component, may be greater than that of the area of the non-metal material, which is exposed to the vacuum space and included in the first component, and an area of the non-metal material, which is exposed to the vacuum space and included in the second component.

As a second example, the time t1a may be greater than or equal to about 0.5 hr and less than or equal to about 1 hr. The time t1b may be greater than or equal to about 24.0 hr and less than or equal to about 65 hr. The time Δt1 may be about 1.0 hr or more and about 48.0 hr or less. The time Δt1 may be about 2 hr or more and about 24.0 hr or less. The time Δt1 may be about 3 hr or more and about 12.0 hr or less.

In this case, it may be the vacuum adiabatic body that needs to maintain the Δt1 as long as possible. In this case, a case opposite to the examples described in the first example or a case in which the component exposed to the vacuum space is made of a thermoplastic material may be an example. A duplicated description will be omitted. In the vacuum adiabatic body vacuum exhaust process, the time Δt1 may be a time t1a or more and a time t1b or less. The time t2a may be greater than or equal to about 0.1 hr and less than or equal to about 0.3 hr. The time t2b may be greater than or equal to about 1 hr and less than or equal to about 5.0 hr.

The time Δt2 may be about 0.2 hr or more and about 3.0 hr or less. The time Δt2 may be about 0.3 hr or more and about 2.0 hr or less. The time Δt2 may be about 0.5 hr or more and about 1.5 hr or less. In this case, even if the time Δt2 is kept as short as possible, the sufficient outgassing through the getter may be applied to the vacuum adiabatic body.

In the vacuum adiabatic body vacuum exhaust process, the time Δt3 may be a time t3a or more and a time t3b or less.

The time t3a may be greater than or equal to about 0.2 hr and less than or equal to about 0.8 hr. The time t3b may be greater than or equal to about 1 hr and less than or equal to about 65.0 hr. The time Δt3 may be about 0.2 hr or more and about 48.0 hr or less. The time Δt3 may be about 0.3 hr or more and about 24.0 hr or less. The time Δt3 may be about 0.4 hr or more and about 12.0 hr or less. The time Δt3 may be about 0.5 hr or more and about 5.0 hr or less. After the heating or drying process is performed during the exhaust process, the cooling process may be performed.

For example, when the heating and/or drying process is performed for a long time, the time Δt3 may be long. The vacuum adiabatic body according to the present disclosure may be manufactured so that the time Δt1 is greater than the time Δt2, the time Δt1 is less than or equal to the time Δt3, or the time Δt3 is greater than the time Δt2.

The following relational expression is satisfied: Δt2<Δt1≤Δt3. The vacuum adiabatic body according to an embodiment may be manufactured so that the relational expression: Δt1+Δt2+Δt3 may be greater than or equal to about 0.3 hr and less than or equal to about 70 hr, be greater than or equal to about 1 hr and less than or equal to about 65 hr, or be greater than or equal to about 2 hr and less than or equal to about 24 hr. The relational expression: Δt1+Δt2+Δt3 may be manufactured to be greater than or equal to about 3 hr and less than or equal to about 6 hr.

An example of the vacuum pressure condition during the exhaust process is as follows. The present disclosure may be any one of the following examples or a combination of two or more examples. A minimum value of the vacuum pressure in the vacuum space during the exhaust process may be greater than about 1.8E-6 Torr. The minimum value of the vacuum pressure may be greater than about 1.8E-6 Torr and less than or equal to about 1.0E-4 Torr, be greater than about 0.5E-6 Torr and less than or equal to about 1.0E-4 Torr, or be greater than about 0.5E-6 Torr and less than or equal to about 0.5E-5 Torr. The minimum value of the vacuum pressure may be greater than about 0.5E-6 Torr and less than about 1.0E-5 Torr.

As such, the limitation in which the minimum value of the vacuum pressure provided during the exhaust process is because, even if the pressure is reduced through the vacuum pump during the exhaust process, the decrease in vacuum pressure is slowed below a certain level.

As an embodiment, after the exhaust process is performed, the vacuum pressure of the vacuum space may be maintained at a pressure greater than or equal to about 1.0E-5 Torr and less than or equal to about 5.0E-1 Torr. The maintained vacuum pressure may be greater than or equal to about 1.0E-5 Torr and less than or equal to about 1.0E-1 Torr, be greater than or equal to about 1.0E-5 Torr and less than or equal to about 1.0E-2 Torr, be greater than or equal to about 1.0E-4 Torr and less than or equal to about 1.0E-2 Torr, or be greater than or equal to about 1.0E-5 Torr and less than or equal to about 1.0E-3 Torr. As a result of predicting the change in vacuum pressure with an accelerated experiment of two example products, one product may be provided so that the vacuum pressure is maintained below about 1.0E-04Torr even after about 16.3 years, and the other product may be provided so that the vacuum pressure is maintained below about 1.0E-04Torr even after about 17.8 years.

As described above, the vacuum pressure of the vacuum adiabatic body may be used industrially only when it is maintained below a predetermined level even if there is a change over time.

Fig. 5a is a graph of an elapsing time and pressure in the exhaust process according to an example, and Fig. 5b is a view explaining results of a vacuum maintenance test in the acceleration experiment of the vacuum adiabatic body of the refrigerator having an internal volume of about 128 liters.

Referring to Fig. 5b, it is seen that the vacuum pressure gradually increases according to the aging. For example, it is confirmed that the vacuum pressure is about 6.7E-04 Torr after about 4.7 years, about 1.7E-03 Torr after about 10 years, and about 1.0E-02 Torr after about 59 years. According to these experimental results, it is confirmed that the vacuum adiabatic body according to the embodiment is sufficiently industrially applicable.

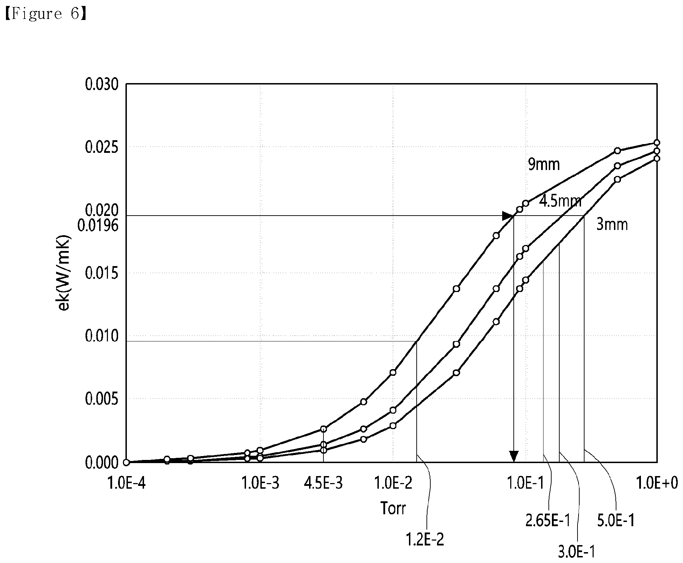

Fig. 6 is a graph illustrating results obtained by comparing the vacuum pressure with gas conductivity. Referring to Fig. 6, gas conductivity with respect to the vacuum pressure depending on a size of the gap in the vacuum space 50 was represented as a graph of effective heat transfer coefficient (eK). The effective heat transfer coefficient (eK) was measured when the gap in the vacuum space 50 has three values of about 3 mm, about 4.5 mm, and about 9 mm. The gap in the vacuum space 50 is defined as follows. When the radiation resistance sheet 32 exists inside surface vacuum space 50, the gap is a distance between the radiation resistance sheet 32 and the plate adjacent thereto. When the radiation resistance sheet 32 does not exist inside surface vacuum space 50, the gap is a distance between the first and second plates. It was seen that, since the size of the gap is small at a point corresponding to a typical effective heat transfer coefficient of about 0.0196 W/mK, which is provided to an adiabatic material formed by foaming polyurethane, the vacuum pressure is about 5.0E-1 Torr even when the size of the gap is about 3 mm.

Meanwhile, it was seen that the point at which reduction in adiabatic effect caused by the gas conduction heat is saturated even though the vacuum pressure decreases is a point at which the vacuum pressure is approximately 4.5E-3 Torr. The vacuum pressure of about 4.5E-3 Torr may be defined as the point at which the reduction in adiabatic effect caused by the gas conduction heat is saturated.

Also, when the effective heat transfer coefficient is about 0.01 W/mK, the vacuum pressure is about 1.2E-2 Torr. An example of a range of the vacuum pressure in the vacuum space according to the gap is presented. The support may include at least one of a bar, a connection plate, or a support plate. In this case, when the gap of the vacuum space is greater than or equal to about 3 mm, the vacuum pressure may be greater than or equal to A and less than about 5E-1 Torr, or be greater than about 2.65E-1 Torr and less than about 5E-1 Torr. As another example, the support may include at least one of a bar, a connection plate, or a support plate. In this case, when the gap of the vacuum space is greater than or equal to about 4.5 mm, the vacuum pressure may be greater than or equal to A and less than about 3E-1 Torr, or be greater than about 1.2E-2 Torr and less than about 5E-1 Torr.

As another example, the support may include at least one of a bar, a connection plate, or a support plate, and when the gap of the vacuum space is greater than or equal to about 9 mm, the vacuum pressure may be greater than or equal to A and less than about 1.0X10^-1 Torr or be greater than about 4.5E-3 Torr and less than about 5E-1 Torr.

Here, the A may be greater than or equal to about 1.0X10^-6 Torr and less than or equal to about 1.0E-5 Torr. The A may be greater than or equal to about 1.0X10^-5 Torr and less than or equal to about 1.0E-4 Torr. When the support includes a porous material or a filler, the vacuum pressure may be greater than or equal to about 4.7E-2 Torr and less than or equal to about 5E-1 Torr. In this case, it is understood that the size of the gap ranges from several micrometers to several hundreds of micrometers. When the support and the porous material are provided together in the vacuum space, a vacuum pressure may be created and used, which is middle between the vacuum pressure when only the support is used and the vacuum pressure when only the porous material is used.

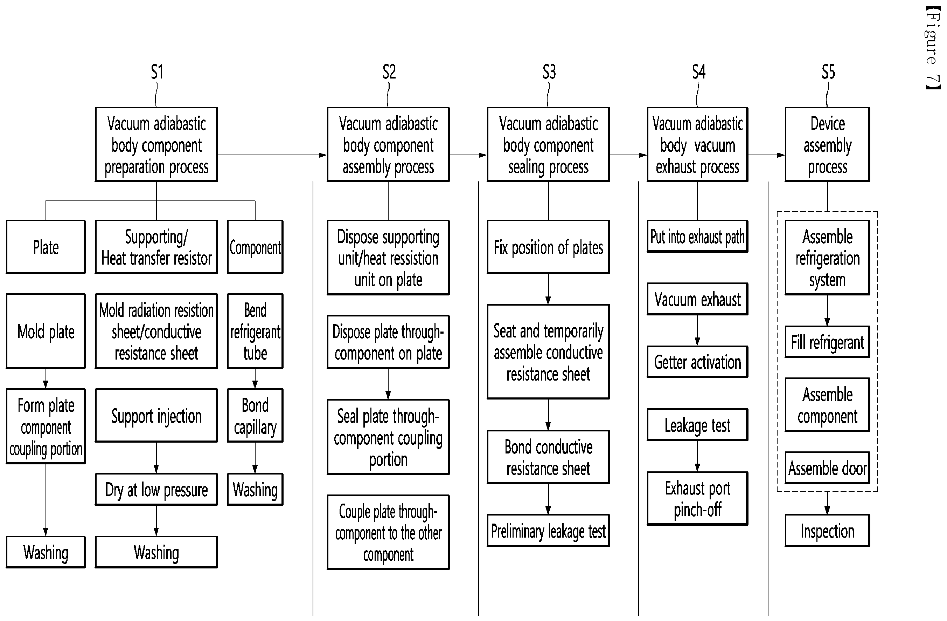

Fig. 7 is a view for explaining a process of manufacturing the vacuum adiabatic body.

Optionally, the vacuum adiabatic body may be manufactured by a vacuum adiabatic body component preparation process in which the first plate and the second plate are prepared in advance. Optionally, the vacuum adiabatic body may be manufactured by a vacuum adiabatic body component assembly process in which the first plate and the second plate are assembled. Optionally, the vacuum adiabatic body may be manufactured by a vacuum adiabatic body vacuum exhaust process in which a gas in the space defined between the first plate and the second plate is discharged. Optionally, after the vacuum adiabatic body component preparation process is performed, the vacuum adiabatic body component assembly process or the vacuum adiabatic body exhaust process may be performed.

Optionally, after the vacuum adiabatic body component assembly process is performed, the vacuum adiabatic body vacuum exhaust process may be performed. Optionally, the vacuum adiabatic body may be manufactured by the vacuum adiabatic body component sealing process (S3) in which the space between the first plate and the second plate is sealed. The vacuum adiabatic body component sealing process may be performed before the vacuum adiabatic body vacuum exhaust process (S4). The vacuum adiabatic body may be manufactured as an object with a specific purpose by an apparatus assembly process (S5) in which the vacuum adiabatic body is combined with the components constituting the apparatus. The apparatus assembly process may be performed after the vacuum adiabatic body vacuum exhaust process.

Here, the components constituting the apparatus means components constituting the apparatus together with the vacuum adiabatic body.

The vacuum adiabatic body component preparation process (S1) is a process in which components constituting the vacuum adiabatic body are prepared or manufactured. Examples of the components constituting the vacuum adiabatic body may include various components such as a plate, a support, a heat transfer resistor, and a tube. The vacuum adiabatic body component assembly process (S2) is a process in which the prepared components are assembled. The vacuum adiabatic body component assembly process may include a process of disposing at least a portion of the support and the heat transfer resistor on at least a portion of the plate.

For example, the vacuum adiabatic body component assembly process may include a process of disposing at least a portion of the support and the heat transfer resistor between the first plate and the second plate. Optionally, the vacuum adiabatic body component assembly process may include a process of disposing a penetration component on at least a portion of the plate. For example, the vacuum adiabatic body component assembly process may include a process of disposing the penetration component or a surface component between the first and second plates. After the penetration component may be disposed between the first plate and the second plate, the penetration component may be connected or sealed to the penetration component coupling portion.

An example of a vacuum adiabatic body vacuum exhaust process vacuum is as follows. The present disclosure may be any one of the, examples or a combination of two or more examples. The vacuum adiabatic body vacuum exhaust process may include at least one of a process of inputting the vacuum adiabatic body into an exhaust passage, a getter activation process, a process of checking vacuum leakage and a process of closing the exhaust port. The process of forming the coupling part may be performed in at least one of the vacuum adiabatic body component preparation process, the vacuum adiabatic body component assembly process, or the apparatus assembly process. Before the vacuum adiabatic body exhaust process is performed, a process of washing the components constituting the vacuum adiabatic body may be performed. Optionally, the washing process may include a process of applying ultrasonic waves to the components constituting the vacuum adiabatic body or a process of providing ethanol or a material containing ethanol to surfaces of the components constituting the vacuum adiabatic body. The ultrasonic wave may have an intensity between about 10 kHz and about 50 kHz. A content of ethanol in the material may be about 50% or more. For example, the content of ethanol in the material may range of about 50% to about 90%. As another example, the content of ethanol in the material may range of about 60% to about 80%.

As another example, the content of ethanol in the material may be range of about 65% to about 75%. Optionally, after the washing process is performed, a process of drying the components constituting the vacuum adiabatic body may be performed. Optionally, after the washing process is performed, a process of heating the components constituting the vacuum adiabatic body may be performed.

A heat exchanger may be installed in a vacuum adiabatic body. The following may be optional. The heat exchanger may connect a first space to a second space. The heat exchanger may exchange heat between a refrigerant discharged from an evaporator and a refrigerant suctioned into the evaporator. At least a portion of the heat exchanger may be placed in a third space.

Matters and descriptions disclosed in any drawing of this document may provide different embodiments. Contents disclosed in any drawing of this document may be applied to the contents of other drawings.

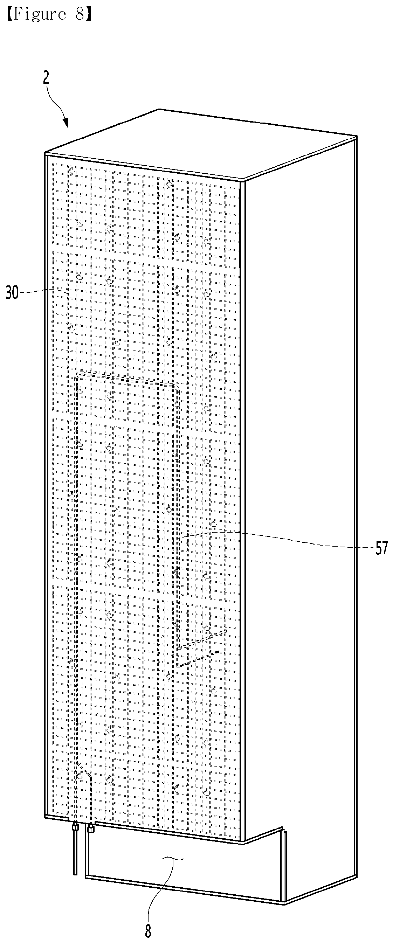

FIG. 8 is a view illustrating an example in which a support and a heat exchanger are installed.

The following may be optional. Referring to FIG. 8, the heat exchanger 57 may be installed on a rear surface of the vacuum adiabatic body. A first end portion of a refrigerant tube constituting the heat exchanger may be led out to a machine room 8. The machine room may be placed in a second space. A second terminal portion of the refrigerant tube constituting the heat exchanger may be withdrawn to a low-temperature space. The low-temperature space may be placed in the first space. The heat exchanger may be provided to a predetermined length to enable sufficient heat exchange. The heat exchanger may have a bent part. The heat exchanger may have a straight section extending in a straight line. At least two straight sections may be provided. The bent part may be provided between the straight sections. At least one bent part may be bent in an extension direction of the third space. At least one bent part may be bent in a thickness direction of the third space.

The following may be optional. A support 30 placed on a rear surface of the vacuum adiabatic body may be provided as a single structure of one body. The single structure may be provided as a structure in which at least two individual units are connected to each other. The units 301 may be respectively coupled vertically. The units 301 may be coupled so that the upper and lower units are alternately disposed. Thus, the single structure may be provided. There may be a left-right gap in a left and right direction of each of the units. The bent part may not be placed in the left-right gap of each unit. Thus, the positioning of the bent part may be convenient. Thus, the heat exchanger may be stably supported. When there are two bent parts, the two bent parts may be placed on the same unit. The heat exchanger may pass through at least two or more units.

The following may be optional. The support may be provided as a lattice structure. The heat exchanger may pass between the lattices. The heat exchanger may move while being placed on the single structure. The heat exchanger may be placed on the plate while being placed on the single structure. The support may be made of PPS. The support may be made of PPS containing glass fiber.

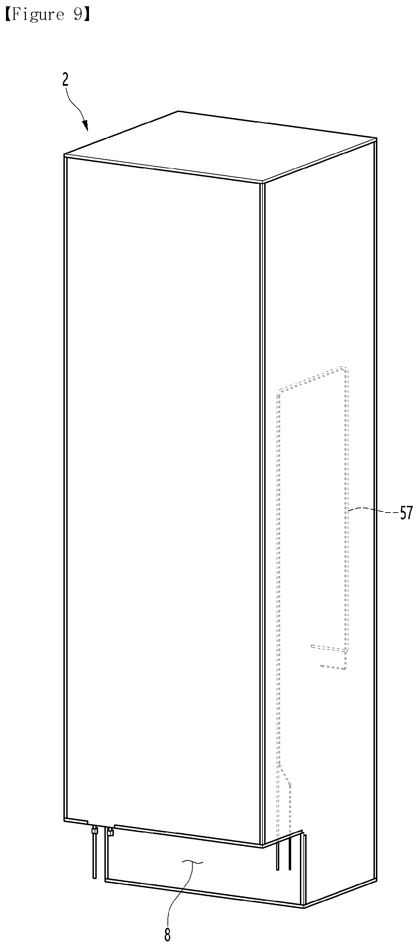

FIG. 9 is a view illustrating an example in which the support and the heat exchanger are installed.

The following may be optional. The heat exchanger 57 may be installed on a side surface of the vacuum adiabatic body. The heat exchanger may be installed on the other surface. The descriptions of FIG. 8 may be applied to FIG. 9. The heat exchanger may be installed on at least one surface of the vacuum adiabatic body. The heat exchanger may be installed on either surface of the vacuum adiabatic body.

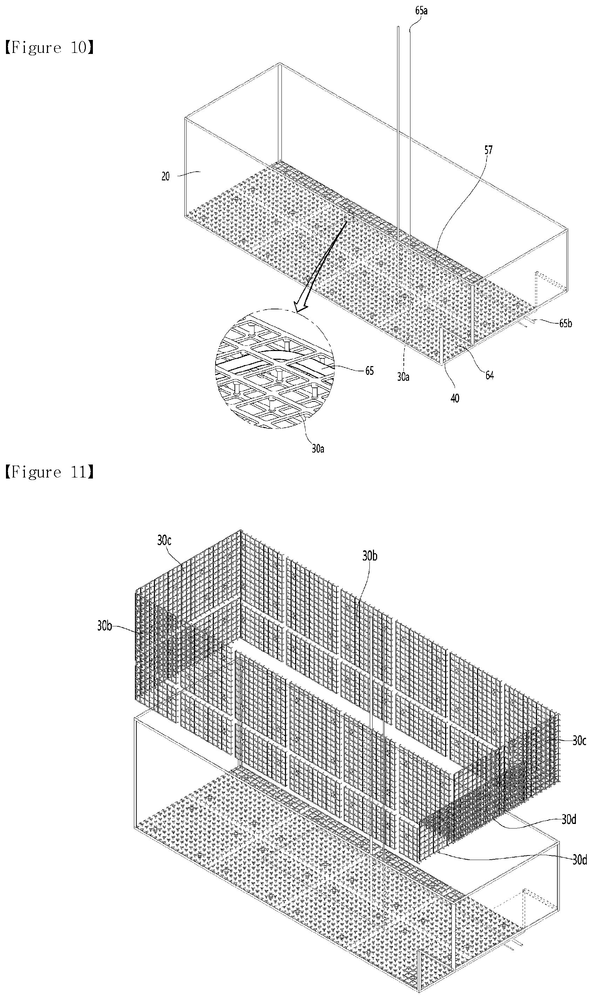

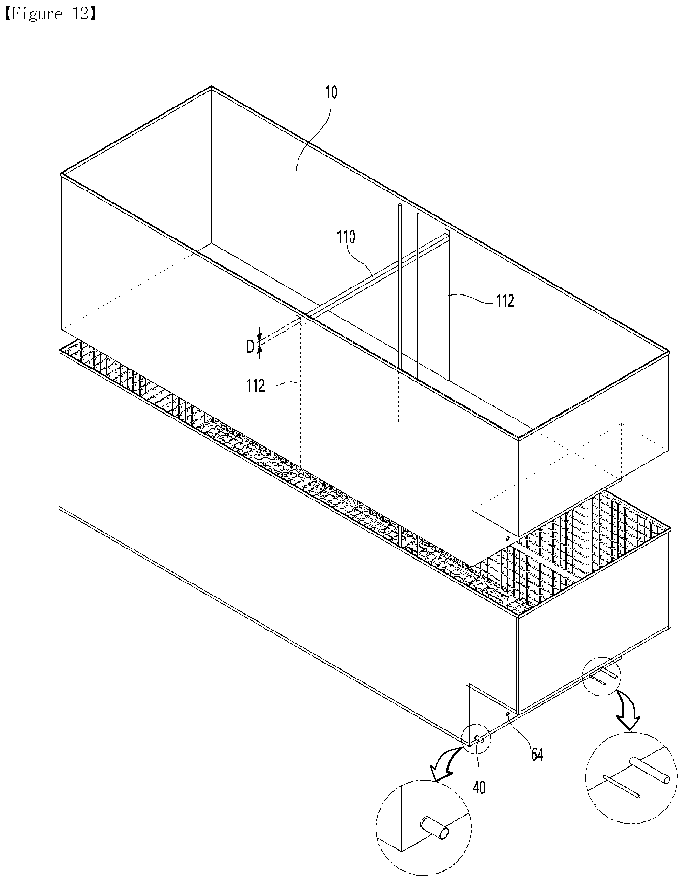

FIGS. 10 and 12 are views sequentially illustrating a process of installing the heat exchanger. FIG. 10 is a view illustrating a state in which the heat exchanger is seated on a rear surface of a second plate. FIG. 11 is a view illustrating a state in which the support is seated on the other surface except for the rear surface. FIG. 12 is a view illustrating a state in which a first plate is seated.

Descriptions will be made with reference to FIG. 10. The following may be optional. A rear support 30a of the single structure and the heat exchanger 57 may be placed together on a second plate 20. The second plate may be disposed so that an opening faces upward. The opening may be an opening in a refrigerator body. The heat exchanger may be fixed without being separated from the support. The heat exchanger may move in an extension direction of a third space by a length of a unit lattice of the support. The heat exchanger may move in a thickness direction of the third space by a height of the support.

The following may be optional. The heat exchanger may have a first terminal 65a leading to an evaporator. The leading out may be understood as getting out of the third space. The first terminal may be withdrawn by being bent in the third space. The heat exchanger may have a second terminal 65b leading to a compressor. The second terminal may be withdrawn without the bending. A port 40 may be installed in the second plate 20. The port may perform at least one function of exhausting and gettering the vacuum adiabatic body. The second plate may be provided with a through-hole 64. The through-hole may connect a first space to a second space.

Descriptions will be made with reference to FIG. 11. The following may be optional. After the rear support is mounted, the support on the other surface may be mounted. The support on the other surface may include at least one of a left and right support 30b, an upper and lower support 30c, and a machine room support 30d. At least one of the supports on the other surface may be provided as a single structure. Any two adjacent supports of the supports may be in contact with each other. Any two adjacent supports of the supports may be supported with respect to each other.

Descriptions will be made with reference to FIG. 12. The following may be optional. After the support is mounted, the first plate 10 may be mounted. The support 30 may be placed between the first and second plates 10 and 20. The first plate 10 may have the opening. In order to maintain a shape of the first plate, a support frame may be provided on an inner surface of the first plate. The support frame may be coupled to the first plate by at least one of methods such as welding, mechanical coupling, etc.

The support frame may include at least one of a first support frame 11 connecting the opening and a second frame 112 provided on each of the left and right surfaces of the first plate. The second frame 112 may extend to each of ends of the left and right surfaces of the first plate. The second frame 112 may prevent the left and right surfaces of the first plate from being bent. The first support frame 11 may not be provided at the ends of the left and right surfaces of the first plate. The first support frame 11 may be provided at a position spaced a predetermined distance D from each of the ends of the left and right surfaces of the first plate. Each of the first support frame 11 and the second frame 112 may be provided in a ' 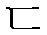 ' structure. The first support frame may be prevented from being in direct contact with a component that is mounted later at the end of the first frame. Thus, adiabatic performance may be improved. Here, the component may include a refrigerator front panel, a heating wire, and doors. The first support frame 11 may prevent the left and right surfaces of the first plate from moving away from each other. That is, at least one of a lifting phenomenon of the plate member or a damage of the first plate may be prevented from occurring. The second frame 112 may prevent the left and right surfaces of the first plate from moving away from each other. An action of the first frame 112 may be greater than that of the second frame 112.

In the state of FIG. 11, the support on the other surface excluding the rear support may fall over. For example, in the state of FIG. 11, the left and right support 30b may fall over in a direction of the rear surface. In this state, the mounting of the first plate 10 may be impossible. A temporary assembled structure may be provided to prevent the support on the other surface from falling over.

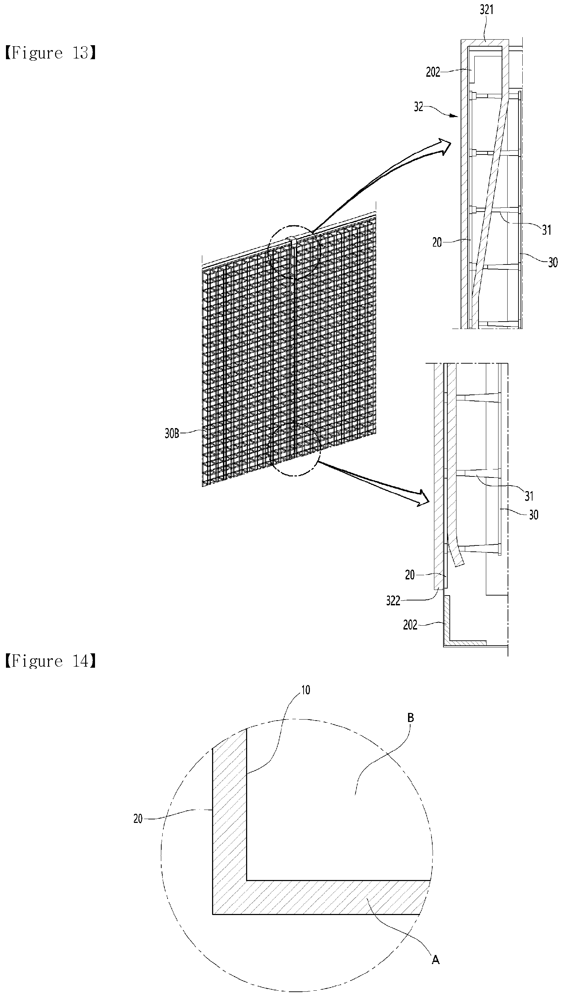

FIG. 13 is a view illustrating a configuration of preventing the support disposed on the other surface from falling over. Descriptions will be made with reference to FIG. 13. The following may be optional. A clip 32 for fixing the support 30b on the other surface and the second plate may be provided. The clip 32 may hold an outer surface of the second plate and an inner surface of the support plate 35. The clip 32 may include a head 321. The head 32 may be provided larger than a body of the clip 32. The body may have a shape in which the head is deflated. The head 321 may be provided in a size capable of accommodating a reinforcing frame 202. The head 321 may be placed on an edge of the vacuum adiabatic body. The clip 32 may be provided with a tail 322. The tail 322 may be provided with a structure in which two branches are elastically supported. The two branches may be provided as two branches extending from the head 321. The tail 322 may be inserted lengthily downward from the side surface. When the tail 322 is inserted into the side surface, the tail 322 may pass through a lattice of the support. While the tail 322 passes through the lattice, two branches of the tail 322 may occur. The two branches of the tail may be deflated after passing through the lattice. The clip 32 may be fixed in position without falling out easily by the tail. The tail may be inserted to avoid the bar 31.

FIG. 14 is a view illustrating any edge of a vacuum adiabatic body. FIG. 14 illustrates a configuration on which the port, the through-hole, and the end portion of the heat exchanger are placed. Descriptions will be made with reference to FIG. 14.

A space between the first plate 10 and the second plate 2 may be provided as a third space, which is a vacuum space. The support 30 may be inserted between the first and second plates. The support 30 may maintain a shape of the third space. When any surface of the vacuum adiabatic body is observed perpendicularly to the surface, a first area on which the support extends in the longitudinal direction of the third space, and a second area on which the support extends in the thickness direction of the third space may be provided. In the drawing, the first area may be indicated as A, and the second area may be indicated as B.

The following may be optional. The port 40 may be disposed on either the first area or the second area. The port 40 may be disposed to overlap the first area and the second area. The port 40 may be disposed so as not to overlap the support and the third space in the thickness direction. The second terminal 65b of the heat exchanger may be disposed on the first area. The first terminal 65a of the heat exchanger may be disposed on the second area. The through-hole 64 may be disposed on the first area. An adiabatic effect may be greatly enhanced by the configuration. The vacuum adiabatic body may be conveniently manufactured by the configuration.

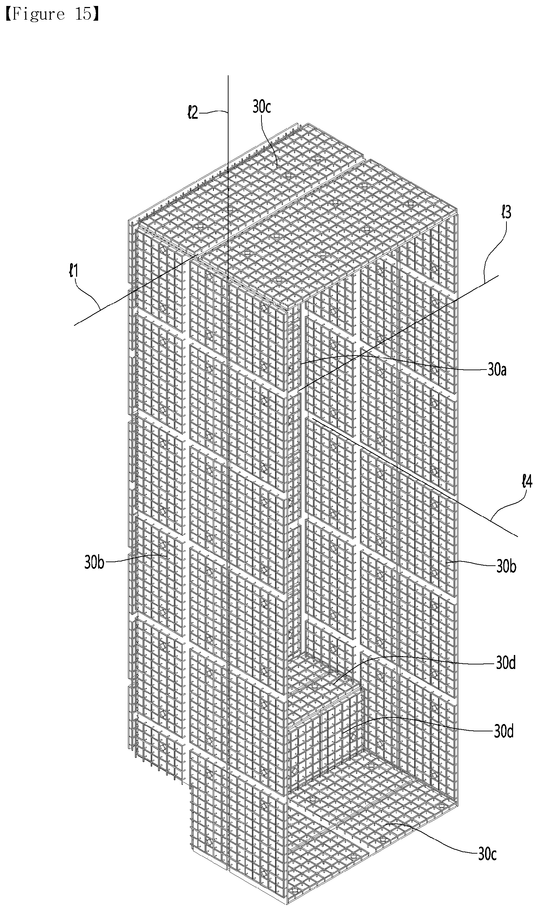

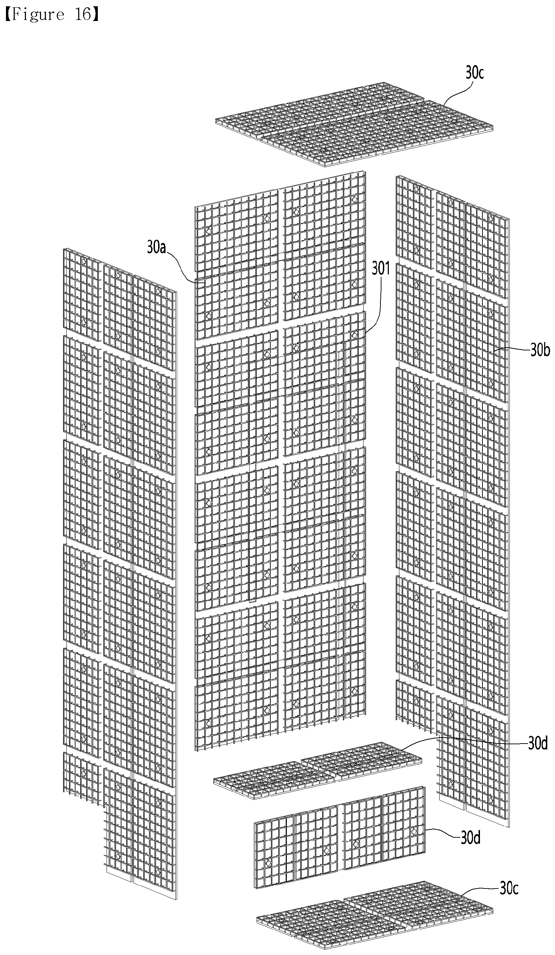

FIG. 15 is a view of the support inserted into the third space. FIG. 16 is a view illustrating a state in which each support is separated. This will be described with reference to FIGS. 15 and 16.

The following may be optional. At least one of the rear support 30a, the left and right support 30b, the upper and lower support 30c, and the machine room support 30d may be included as a module. The modules may be in contact with each other. Each support may be provided as a single structure. The single structure may be provided as the unit 301. A gap may be provided between the units. In the gap, supporting force may be weak. A pair of extension lines L1 and L2 extending along the gap between two adjacent single structures may be provided. The two extension lines may be disposed so as not to meet each other. The two extension lines may be twisted at a right angle to each other. This configuration may prevent weak points of the supporting force from overlapping each other. As a result, deformation resistance of the vacuum adiabatic body may greatly increase. A relationship between the pair of extension lines may also be generated for lines L3 and L4. The units may be used commonly. The inventory cost of the components may be reduced by utilizing commonization of the units. This may call a commonization unit.

The following may be optional. At least one commonization unit may be used in the single structure having the largest area in at least two single structures among the rear support 30a, the left and right support 30b, the upper and lower support 30c, and the machine room support 30d. In an embodiment, the rear support 30a having a large left-right width may be the largest. In this case, at least one commonization unit may be used for the rear support. The rear support may use a plurality of commonization units. In addition to the rear support, the commonization unit may also be cut and assembled to the other support. The commonization unit may be cut and assembled to the other support.

The following may be optional. At least one commonization unit may be used in the single structure having the smallest area in at least two single structures among the rear support 30a, the left and right support 30b, the upper and lower support 30c, and the machine room support 30d. In an embodiment, the machine room support 30d may be the smallest. In this case, at least one commonization unit may be used for the machine room support. A plurality of commonization units may be used for the machine room support. For other supports other than the machine room support, the commonization unit may be used. The plurality of commonization units may be used for the other supports. The commonization unit may be assembled by cutting or slicing the commonization unit and then be assembled to the other supports.

In the gap, the plate and the support may not be in contact with each other. This may reduce heat transfer through the plate. In the gap, adjacent units may not be in contact with each other. As a result, heat conduction between the units may be blocked. This may reduce heat transfer through the support.

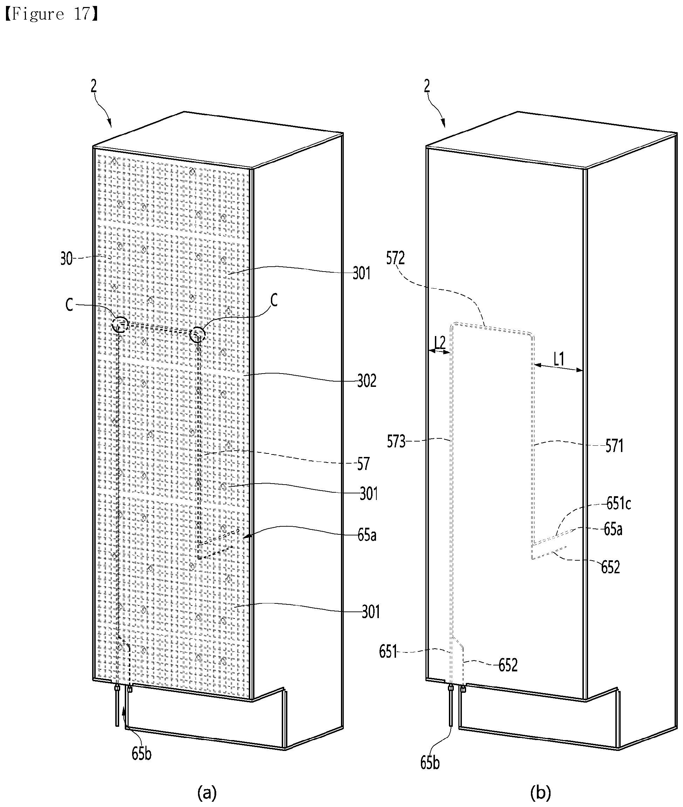

FIG. 17 is a view for explaining detailed configurations of the heat exchanger.

Descriptions will be made with reference to FIG. 17. The heat exchanger may include a first terminal 65a and a second terminal 65b. The heat exchanger may include a refrigerant tube 65. The heat exchanger may include a discharge pipe 651 through which a refrigerant is discharged from the evaporator. The heat exchanger may include a suction pipe 652 through which the refrigerant is suctioned into the evaporator. The following may be optional. In at least one of the first terminal 65a and the second terminal 65b, the discharge pipe and the suction pipe may be branched from the inside of the third space. After the discharge pipe and the suction pipe are branched, heat exchange may not occur. The heat exchanger may include an ascending part 571. The ascending part 571 may extend in a direction parallel to gravity. The ascending part 571 may allow a gaseous refrigerant discharged from the evaporator to ascend. The liquid refrigerant within the ascending part may not ascend due to the gravity. The ascending part 571 may have a predetermined length. The ascending part 571 may perform the role of a vapor-liquid separator in the refrigeration system. The heat exchanger may include a descending part 573. The ascending part 573 may be provided at a longer length than the ascending portion 571. Thus, a sufficient heat exchange distance may be secured. A connection part 572 connecting the descending part 573 to the ascending part 571 may be provided. The connection part 572 may extend in a direction intersecting the gravity. A distance L2 between edges of the support adjacent to the descending part 573 may be shorter than a distance L1 between edges of the support adjacent to the ascending part 571. As a result, an arrangement structure of the evaporator and the machine room may be optimized. As a configuration for securing a sufficient heat exchange distance of the heat exchanger 57, the heat exchanger may pass through at least two units. At least one of the ascending part 571 or the falling portion 573 may pass through at least two units. The connection part 572 may be placed on the single unit.

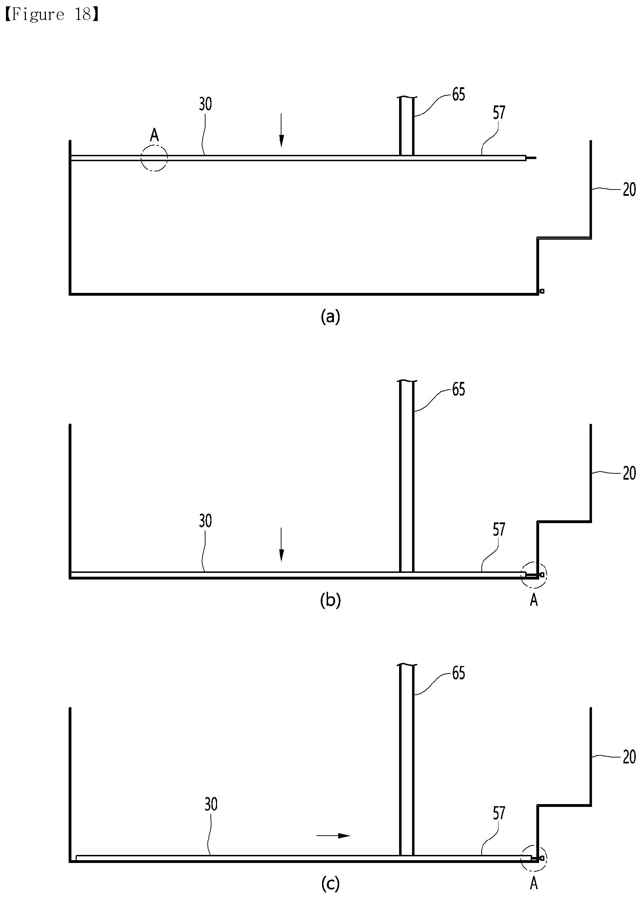

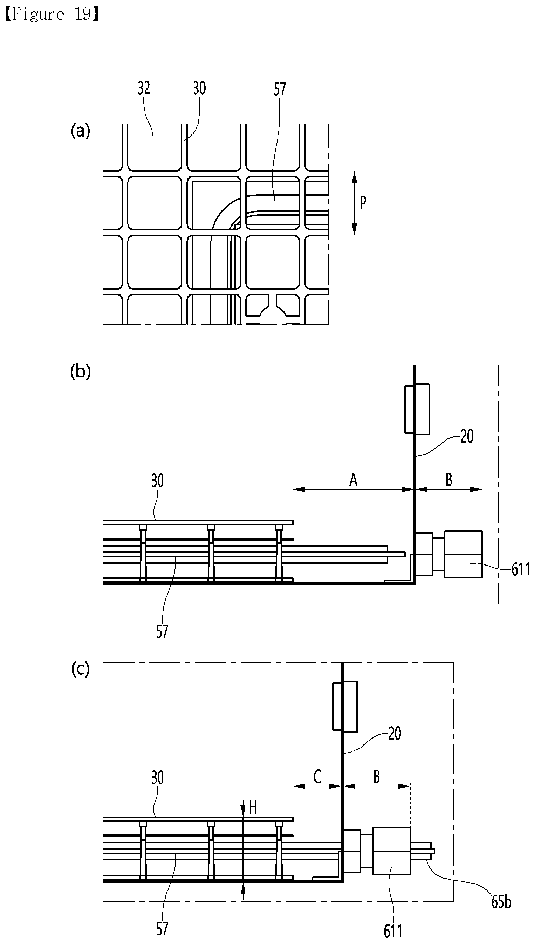

FIG. 18 is a side view illustrating a relationship between the mounting of the support and the plate in sequence. FIG. 19 is an auxiliary view of FIG. 18. This will be described with reference to FIGS. 18 and 19.

The following may be optional. In FIG. 18(a), the support 30 and the heat exchanger 57 may move as one body. The body may move downward through the opening of the second plate 20. FIG. 19(a) is a plan view of a portion A of FIG. 18(a). FIG. 19(a) illustrates that the heat exchanger 57 freely moves within a range of one pitch P of the support. The heat exchanger 57 may move in a gap between a pair of bars 31 adjacent to each other. The radiation resistance sheet 20 may not be provided in the gap between the pair of bars 31. The one body may reach a bottom of the second plate 20. FIG. 18(b) illustrates a state in which the one body is placed.

FIG. 19(b) is an enlarged view of a portion A in FIG. 18(b). The descriptions will be made with reference to FIGS. 18(b) and 19(b).

The following may be optional. A first gap A between a lower end of the support 30 and the second plate 20 may be provided in a predetermined size. Thus, the second terminal 65b may be coupled to the sealing terminal. The first gap A may be provided to be greater than a first length B of the sealing terminal 611. Thus, the second terminal 65b may be withdrawn to pass through the sealing terminal. The heat exchanger 57 may move within the range of the pitch P of the support. The heat exchanger 57 may move by a length equal to the first gap A plus the pitch P. The length of the first gap A plus the pitch P may be longer than the first length B of the sealing terminal. The pitch P may be greater than the first gap A. Thus, the size of the first gap A may be made as small as possible. Thus, a surface area of the third space in which the support is not supported may be reduced. In other words, a support movement distance for the withdrawal of the second terminal 65b may be minimized.

FIG. 18(c) illustrates that the one body moves so that the second terminal is withdrawn. FIG. 19(c) is an enlarged view of a portion A of FIG. 18(c). This will be described with reference to FIGS. 18(c) and 19(c).

The following may be optional. When the second terminal 65b is withdrawn, a second gap C between the lower end of the support 30 and the second plate 20 may be provided at a predetermined size. The second gap C may be equal to or less than a height H of the support 30. Thus, the rear support 30a and the other support (here, the machine room support) adjacent thereto may be in contact with each other. The second gap C may be shorter than the first length B of the sealing terminal 611. This will facilitate smooth supporting between the supports.

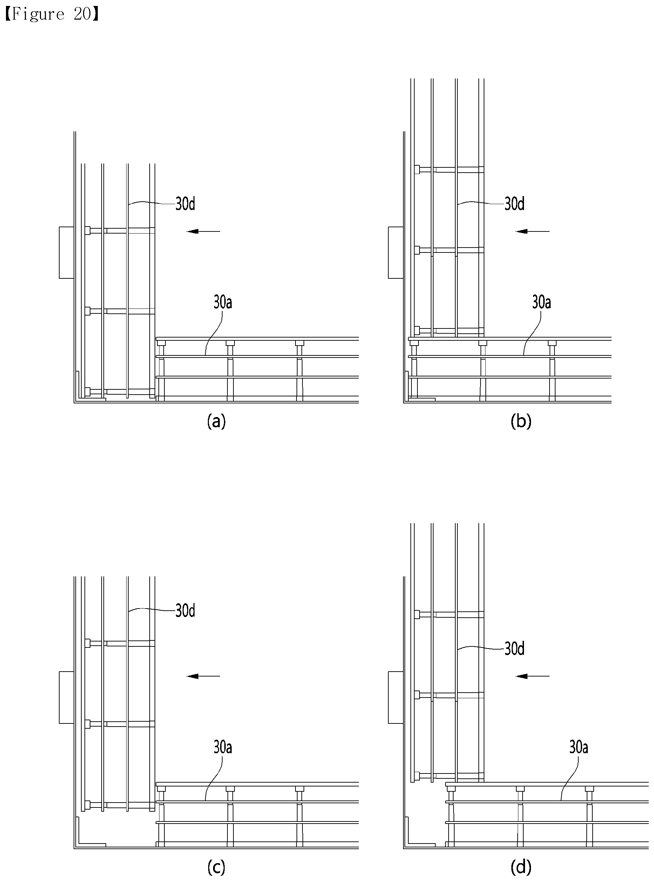

FIG. 20 is a view illustrating an example of the supporting between adjacent supports. Descriptions will be made with reference to FIG. 20.

FIG. 20(a) illustrates the machine room support 30d that is in contact with the bottom. FIG. 20(b) illustrates the rear support 30a moving to the bottom. The following may be optional. Here, an inner surface of the machine room support may be in contact with a side surface of the other support. The machine room support may have an opening through which the second terminal 65b passes. In this case, large supporting force may be obtained. In the state of FIG. 20(b), the inner surface of the rear support may be in contact with the side surface of the machine room support. In this case, the large supporting force may be obtained. In the two cases, large supporting force may be obtained. However, there is a difficult in assembly and coupling.

FIGS. 20(c) and 20(d) illustrate that there is a portion at which two supports overlap each other. It may correspond to the embodiment of FIGS. 18 and 19. It may refer to FIG. 19(c) and its description. FIG. 20(c) may mean a case in which the second gap C and the height H of the support are the same. FIG. 20(d) may mean that the second gap C is smaller than the height H of the support.

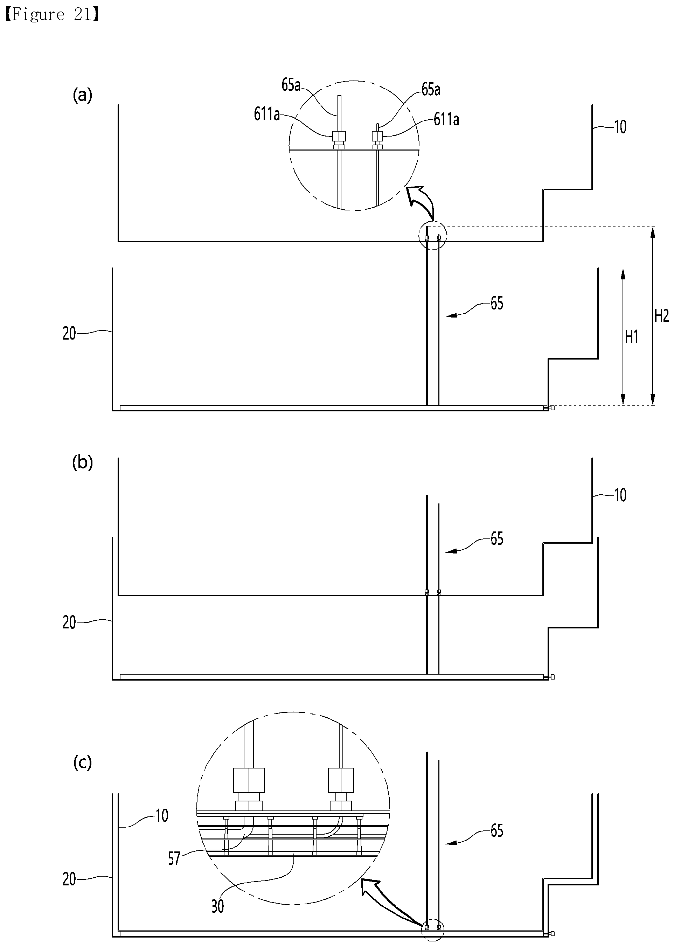

FIG. 21 is a view illustrating a state in which the first plate is mounted. Descriptions will be made with reference to FIG. 21.

FIG. 21(a) illustrates that the first plate moves. The following may be optional. The two refrigerant pipes 65 of the first terminal 65a may be withdrawn through the sealing terminal 611. The first terminal 65a may pass through the sealing terminal 611. The worker may induce and confirm the correct withdrawal of the first terminal 65a. For this purpose, the length H2 of the first terminal 65a may be longer than a front and rear length H1 of the first plate. When mounting the first plate, the arrangement of the sealing terminal 611 and the first member 65a may be used as a reference. FIG. 21(b) illustrates the movement of the first plate. The first plate moving up to the end is illustrated in FIG. 21(c). The support 30 may be placed inside the second plate. For this purpose, the support may be smaller than the second plate. The height of the support may be smaller than the height of the second plate. The surface area of the support may be smaller than a surface area of the second plate.

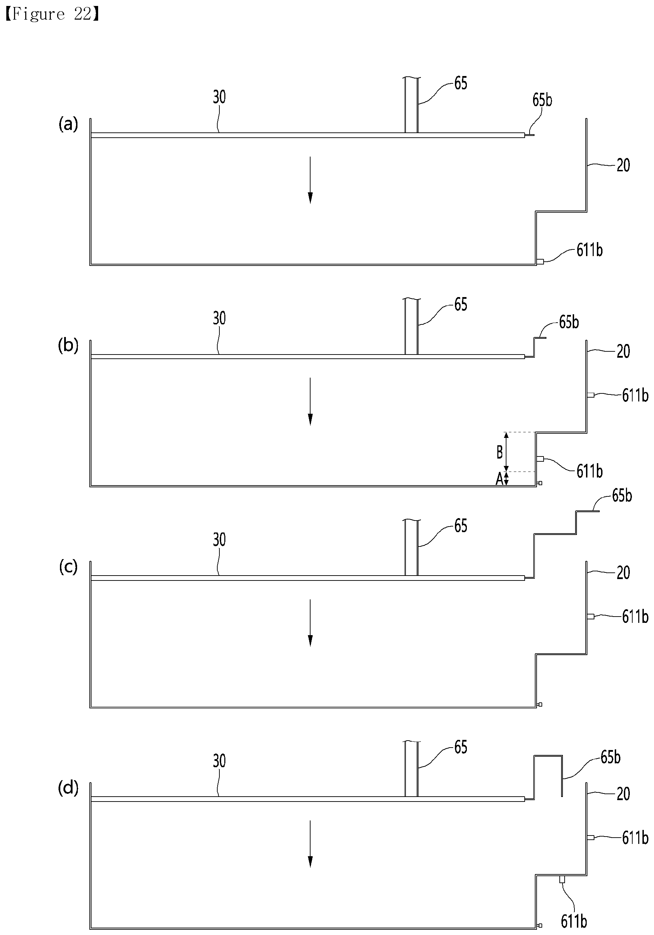

FIG. 22 is a view for explaining the sealing terminal and the position of the second terminal according to various embodiments. The following may be optional.

FIG. 22(a) illustrates that a sealing terminal 611b is disposed on the first area (area A of FIG. 14). The description proposed in FIGS. 18 to 21 may be applied. A radius of curvature of the first terminal may be larger than a radius of curvature of a corner of each of the first and second plates.

FIG. 22(b) illustrate that the sealing terminal 611b is disposed on the second area (area B of FIG. 14). In this embodiment, after the second terminal 65b is branched, it may be bent twice. The second terminal 65b may have a horizontal portion and a vertical portion. In this embodiment, the number of bent parts may increase by two when compared to FIG. 22(a). This embodiment may allow the second terminal 65b to be withdrawn from a center of the machine room. This embodiment may be applied in response to a change in the internal structure of the machine room.

FIG. 22(c) illustrate that the sealing terminal is disposed on the bottom surface of the vacuum adiabatic body. In this embodiment, after the second terminal 65b is branched, it may be bent four times. The second terminal 65b may have a horizontal portion and a vertical portion. In this embodiment, the number of bent parts may increase by two when compared to FIG. 22(b). In this embodiment, the second terminal 65b may be withdrawn from the bottom surface of the vacuum adiabatic body. This embodiment may secure a path of a long branch pipe. This embodiment may utilize the bottom surface of the vacuum adiabatic body.

FIG. 22(d) illustrates that the sealing terminal is disposed on a vertical wall of the machine room. In this embodiment, after the second terminal 65b is branched, it may be bent three times. The second terminal 65b may have a horizontal portion and a vertical portion. In this embodiment, the second terminal may be inserted into the sealing terminal while the support is seated. This embodiment may allow the second terminal 65b to be withdrawn from the side surface of the machine room. This embodiment may secure a path of a long branch pipe. This embodiment may utilize the internal space of the machine room in various manners.

In an embodiments of FIGS. 22(b) to 22(d), it may be desirable to provide a support structure other than the lattice structure for the support. For example, a porous material may be provided. This is because it is difficult to install the support having the lattice structure corresponding to the second terminal 65b together. This is because the second terminal extends along the bending direction of the wall of the vacuum space. The second terminal may be mounted after being bent along the wall of the vacuum space. The second terminal may be bent while the refrigerant pipes 651 and 652 are in contact with each other. The second terminal may be in a state in which side surfaces of the refrigerant pipes 651 and 652 are coupled to each other. The second terminal may be in a state in which the refrigerant pipes 651 and 652 are connected horizontally.

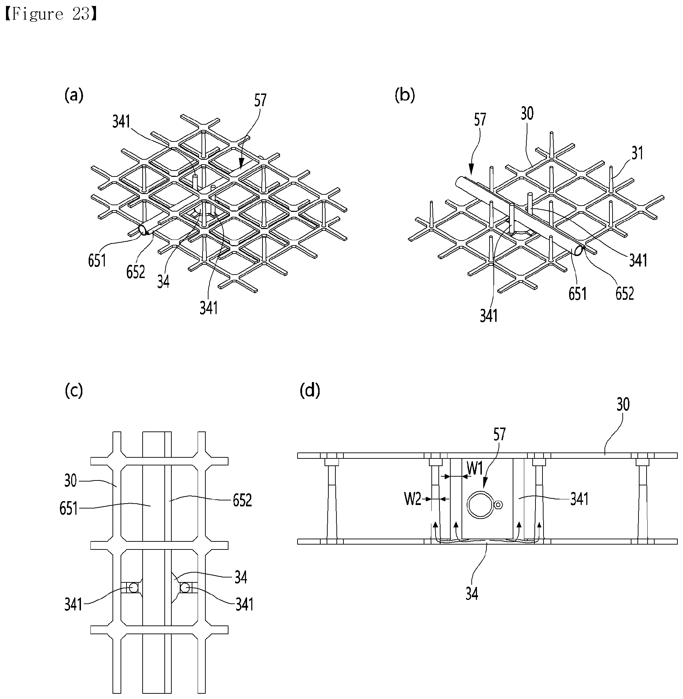

FIG. 23 is a view illustrating a relationship between the support and the heat exchanger according to an embodiment. FIG. 23(a) is a view of a symmetric alignment. FIG. 23(b) is a perspective view illustrating a state in which the support plate disposed at one side is removed. FIG. 23(c) is a plan view, and FIG. 23(d) is a front view. Descriptions will be made with reference to FIG. 23.

The heat exchanger 57 may be supported on an injection structure. The heat exchanger may not be in contact with the support 30 and the plates 10 and 20. The heat exchanger may not be perfectly fixed and may move slightly. The injection structure may support the heat exchanger in an opened state rather than a closed state. The injection structure may be at least partially separated from the heat exchanger.

The following may be optional. The injection structure may include an injection base 34 and a guide bar 341. The guide bar 341 may be provided at left and right sides centered on the injection base 34. A gap of the guide bars 341 may be smaller than a gap of the bar 31. The guide bar 341 may guide the heat exchanger to an accurate position at a narrow gap. When the injection is performed, an injection liquid may first be introduced through the guide bar 341. The injection fluid may first be introduced through a separate structure that is removed during the injection and then introduced into the guide bar 341. Thereafter, the injection liquid may spread to the support plate 35 through the injection base 34. The guide bar 341 may be an unnecessary portion in general injection molded products and may be removed. In an embodiment, the guide bar 341 may guide the position of the heat exchanger 57. The guide bar may stand in a direction intersecting the extension direction of the support plate 35. The guide bar may be integrated with the support plate at either side. The guide bar may not be coupled to the support plate at the other side. The heat conduction in the vertical direction of the support may not occur through the guide bar. Even if the heat exchanger is in contact with the guide bar, the heat transfer may not occur through the third space. A size W1 of the guide bar 341 may be larger than a size of the support bar 31. The size W1 of the guide bar 341 may be larger than an average size W2 of the support bar 31. The size W1 of the guide bar 341 may be larger than a size of the largest portion of the support bar 31. According to this configuration, the guide bar may firmly support the heat exchanger. The guide bar may be provided in plurality.

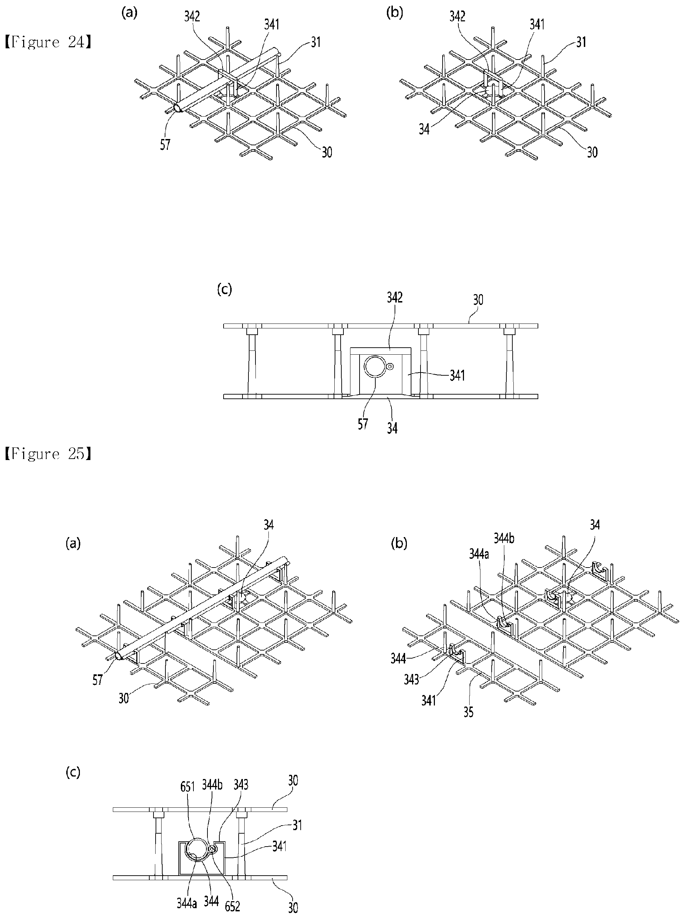

FIG. 24 is a view illustrating a relationship between the support and the heat exchanger according to an embodiment. FIG. 24() is a perspective view, FIG. 24(b) is a perspective view in a state in which the heat exchanger is removed, and FIG. 24(c) is a front view. Descriptions will be made with reference to FIG. 14.

The heat exchanger may include a gap block 342 that prevents withdrawal into an open space of the guide bar 341. The following may be optional. The gap block 342 may be coupled to a free end of the guide bar 341. The gap block 342 may be coupled together to free ends of at least two guide bars 341. At least one gap block 342 may form one body with the guide bar 341. At least one gap block 342 may be provided as a separate member from the guide bar 341 and then coupled to the guide bar. The guide bar of this embodiment may have a height less than the embodiment of FIG. 9. The guide bar may be provided in plurality.

FIG. 25 is a view illustrating a relationship between the support and the heat exchanger according to an embodiment. FIG. 25(a) is a perspective view, FIG. 25(b) is a perspective view illustrating a state in which the heat exchanger is removed, and FIG. 25(c) is a front view. Descriptions will be made with reference to FIG. 25.

At least a portion of the seating part 343 may be provided with a shape corresponding to an outer appearance of the heat exchanger 57. The following may be optional. The heat exchanger may be accurately positioned on the seating part 343. The heat exchanger that is in place may not move even under external force. The seating part may be provided at an end of the guide bar 341. The seating part may be provided to be integrated with the guide bar or as a separate component. The seating part may have a groove 344 in which the heat exchanger is mounted. The groove 344 may include a large first groove 344a in which the discharge pipe 651 is placed, and a small second groove 3444b in which the suction pipe 652 is placed. The second groove may be less than the first groove. The mounting part may be made of plastic. The seating part may be deformed during the insertion of the heat exchanger. After the insertion of the heat exchanger, the seating part may return to its original shape.

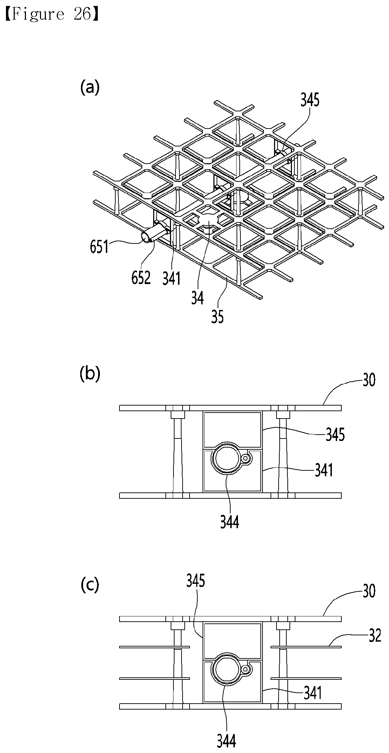

FIG. 26 is a view illustrating a relationship between the support and the heat exchanger according to an embodiment. FIG. 26(a) is a perspective view, FIG. 26(b) is a front view, and FIG. 26(c) is a front view. Descriptions will be made with reference to FIG. 26.

At least a portion of the gap block 345 may be provided with a shape corresponding to an outer appearance of the heat exchanger 57. The following may be optional. The gap block 345 may be provided together with the seating part 343. The gap block may be provided as a separate component from the seating part 343. The gap block and the seating part may be disposed on different facing support plates 35, respectively. The gap block may be provided on the first support plate disposed at an upper side. The seating part may be provided on the second support plate disposed at a side. The gap block and the seating part may be spread out. A predetermined gap may be provided between the gap block and the seating part. Even if the gap block and the seating part are connected, a closed curve may not be formed. A line connecting the gap block to the seating part may form an open curve. This may also be applied to existing other embodiments. The gap block and the seating part may be made of the same material as the support.

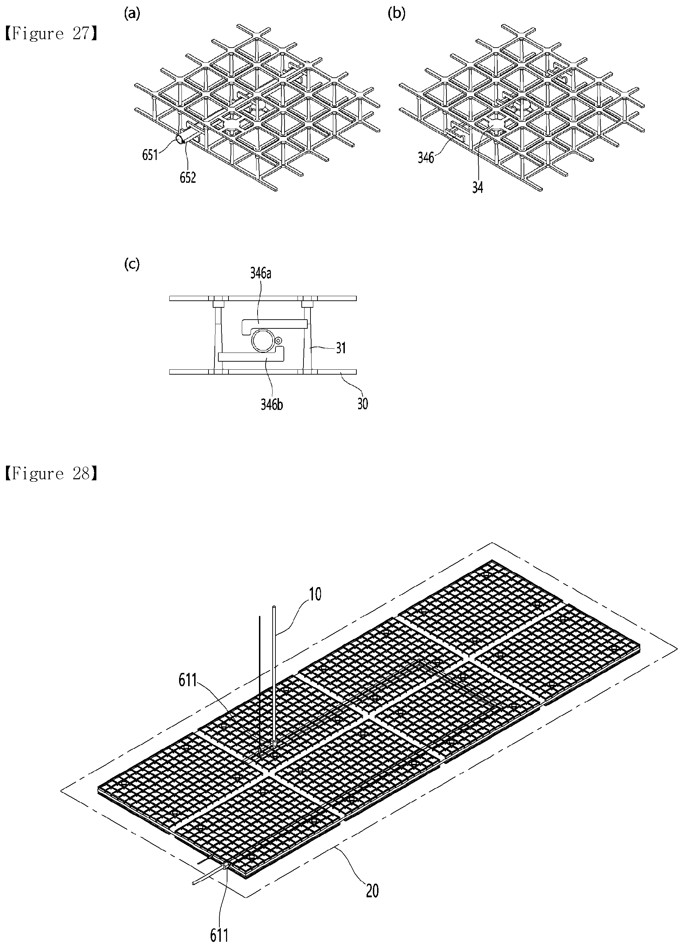

FIG. 27 is a view illustrating a relationship between the support and the heat exchanger according to an embodiment. FIG. 27(a) is a perspective view, FIG. 27(b) is a perspective view illustrating a state in which the heat exchanger is removed, and FIG. 27(c) is a front view. Descriptions will be made with reference to FIG. 27.

An extension bar 346 extending from the bar may be provided. The heat exchanger may be supported on the extension bar 346. The drawing illustrates the extension bar extending from the bar. The following may be optional. The extension bar 346 may extend from at least one of the bar 31, the guide bar 341, or the injection structure. The extension bar 346 may be provided as one body with at least one of the bar 31, the guide bar 341, or the injection structure. The extension bar 346 may extend toward the heat exchanger 57. For example, if the guide bar 341 extends in a first direction, the extension bar 346 may extend in a second direction toward the heat exchanger. The extension bars 346 may be provided in pair of at least two adjacent structures. At least two extension bars 346 may support different positions of the heat exchanger. A bent part may be provided at one side of the extension bar 346. The bent part may be bent in a direction adjacent to the heat exchanger. The heat exchanger may be supported so as not to fall out by the bent part.

FIG. 28 is a view illustrating a relationship between the heat exchanger and the plate according to an embodiment. Descriptions will be made with reference to FIG. 28.

The heat exchanger 57 may be supported on at least one of the plates 1020. The following may be optional. One end of the heat exchanger may be fixed to the first plate 10. The other end of the heat exchanger may be fixed to the second plate 20. The end of the heat exchanger and the plate may be fixed by the sealing terminal 611. The heat exchanger and the plate may be coupled through welding. The heat exchanger and the plate may be fixed. The plate and the heat exchanger may not be in direct contact with other positions other than the end portion of the heat exchanger. The support 30 may not support the heat exchanger.

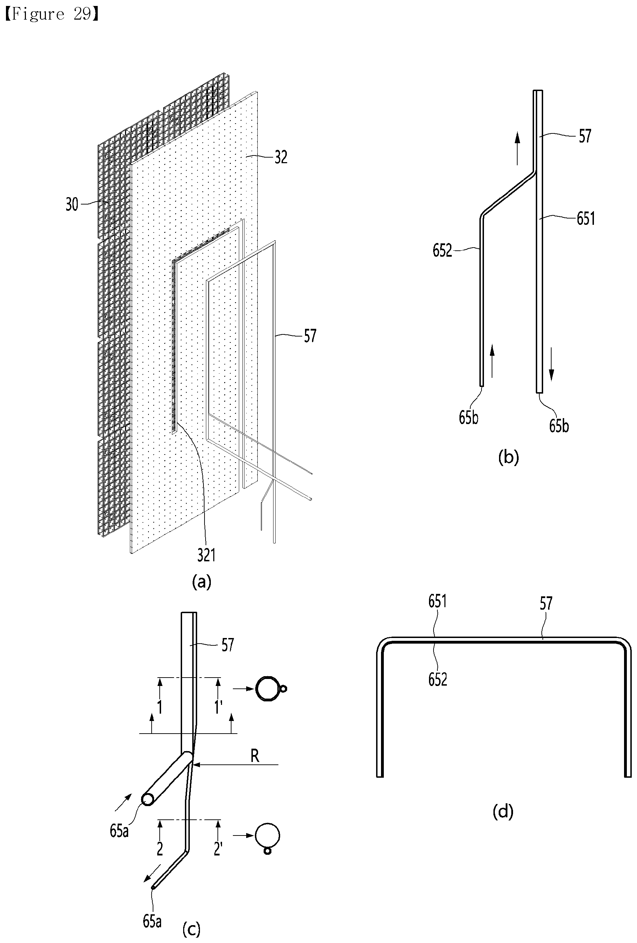

FIG. 29 is a view illustrating a relationship between the support, the radiation resistance sheet, and the heat exchanger. FIG. 29(a) is a perspective view illustrating an arrangement relationship of three members, FIG. 29(b) is a view illustrating the second terminal of the heat exchanger, FIG. 29(c) is a view illustrating the first terminal of the heat exchanger, and FIG. 29(d) is a view illustrating an upper end portion of the heat exchanger. Descriptions will be made with reference to FIG. 29.

At least a portion of the radiation resistance sheet 32 may be removed from the area on which the heat exchanger is placed. At least a portion of the support 30 may be removed from the removed part 321 of the radiation resistance sheet. The heat exchanger may include a refrigerant tube 65. The heat exchanger may include a first terminal 65a and a second terminal 65b. The first terminal may be connected to the evaporator. The second terminal may be connected to the compressor. The heat exchanger may include a discharge pipe 651 through which a refrigerant is discharged from the evaporator. The heat exchanger may include a suction pipe 652 through which the refrigerant is suctioned into the evaporator. The discharge pipe may contain a gaseous refrigerant. The discharge pipe may be provided to be larger than the suction pipe. The following may be optional. The support may be provided by coupling the plurality units to each other. A radiation plate may be provided in a single plate that is cut out. The radiation plate may be provided to be larger than the unit. The radiation plate may cover a gap between at least two units. This may reduce heat transfer. The radiation plates may overlap in the thickness direction of the vacuum space. The other radiation plate may cover an opened position in one radiation due to the overlapping. This may reduce heat radiation. The heat exchanger may be placed in a gap between the units. This allows for efficient use of the space.

The following may be optional. Since a diameter of the discharge pipe 651 is large, an interference with the bar 31 may occur. When connecting the pipes 651 and 652, the pipe may be deformed to damage the support when the pipe is pulled. For this reason, the second terminal may pass in a straight line without the bending. The suction pipe 652 may be bent after being branched. As a result, the two pipes 651 and 652 may be separated from each other. This allows each pipe to be sealed to the plate. It is not easy to seal the two pipes while being attached. It is preferable that a gap between the two pipes be at least 1 pitch, when the gap between the bars is called a pitch.

The following may be optional. The first terminal may pass vertically through the plate. A height of the first terminal 65a may be above the machine room 8. A height of the first terminal 65a of the first terminal may be less than half of the total height of the vacuum adiabatic body. This may allow for connection to the evaporator at an optimal length. This may allow the first terminal to be placed at a position at which defrosting is performed. This may reduce a loss of cold air. In the first terminal, the discharge pipe 651 may be withdrawn by being bent vertically. In the first terminal, the suction pipe 652 may be bent once after being branched. After the first bending, the bending may be performed two times vertically. The suction pipe 652 may be withdrawn after the bending is performed once and two times. A radius of curvature of the bent part (see R2 in FIG. 13) after the bending is performed two times may be smaller than a radius of curvature of the bent part (see R1 in FIG. 13) after the bending is performed once. The bending after the bending is performed once may facilitate the withdrawal of the suction pipe. The bending after the bending is performed once will be described in more detail in FIG. 19.

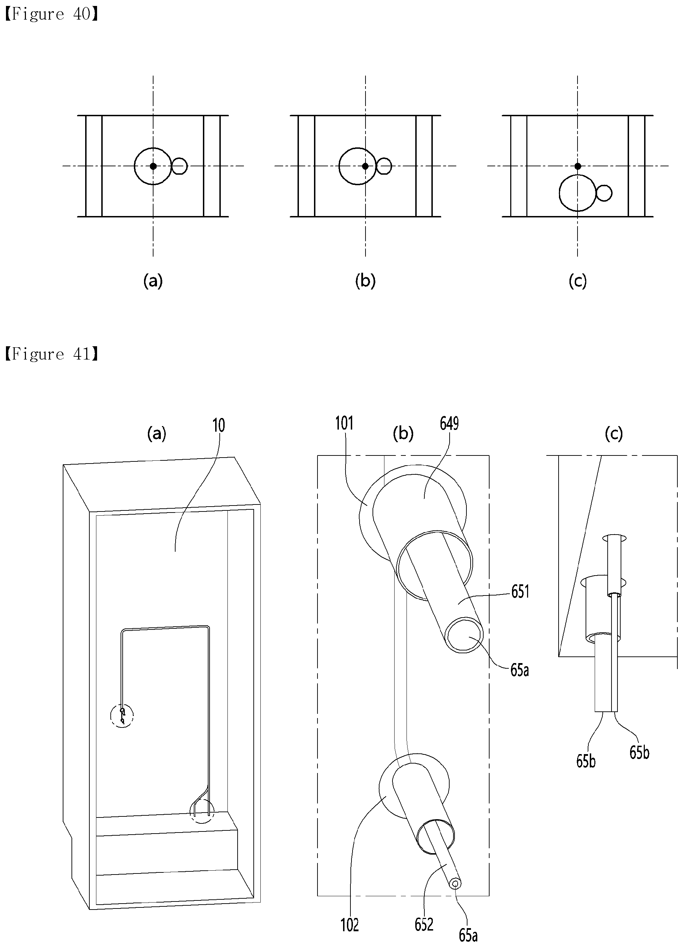

The following may be optional. The discharge pipe and the suction pipe may be arranged in the extension direction of the vacuum space. For example, if the vacuum space extends to left and right sides, the discharge pipe and the suction pipe may be arranged to the left and right sides. The discharge pipe and the suction pipe may be heat-exchanged with each other. The highest position of the heat exchanger may be placed at more than half of the total height of the vacuum adiabatic body. The highest position of the heat exchanger may be lower than the highest position of the vacuum adiabatic body. As a result, the heat exchange performance may be secured. The arrangement of the piping will be described in more detail in FIG. 40.

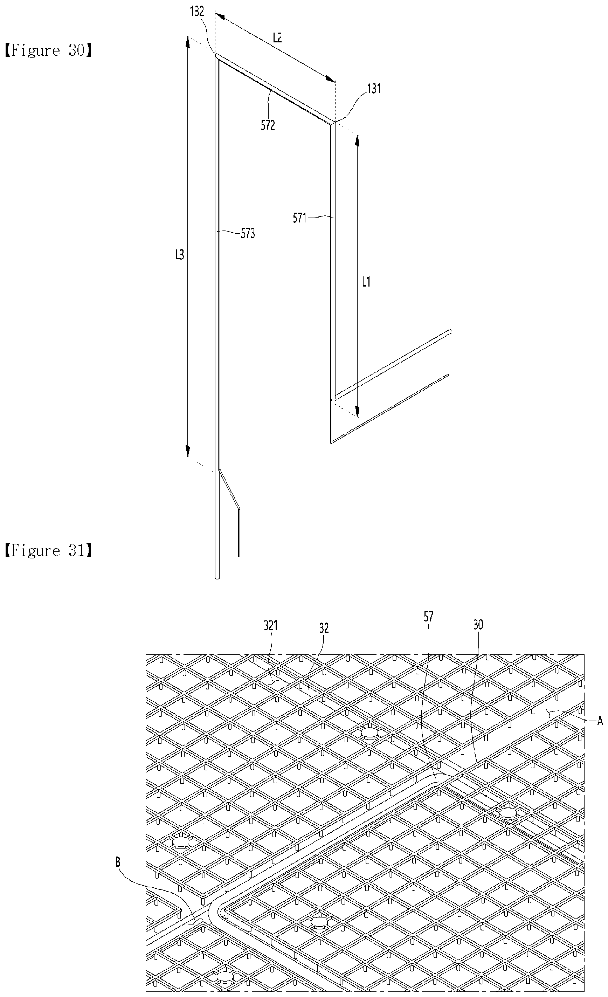

FIG. 30 is a view for explaining an operation related to a refrigerant flow in the heat exchanger. Descriptions will be made with reference to FIG. 30.

The heat exchanger 57 may include an extension part that provides a gap for the heat exchange. The following may be optional. At least one of a first extension part 571 or a third extension part 573 extending so that the vertical direction is dominant may be provided. The heat exchanger 57 may include a second extension part 572 extending predominantly in the left and right direction. The extension part may extend in the extension direction of the vacuum space. The extension part may not extend in the thickness direction of the vacuum space. This is because it is difficult to make a contact surface of the heat exchanger uniformly. The bent parts 131 and 132 that change the extension direction may be provided between at least one of the first and second extension parts 571 and 572 and between the second and third extension parts 572 and 573. The total length of the first, second and third extension parts may be said to be the total length of the heat exchanger. In the area of the first extension part 571, the discharge pipe may perform the role of the gas-liquid separator. In the refrigerant evaporated in the evaporator, the gaseous refrigerant may move to the second extension part 572. The liquid refrigerant in the refrigerant evaporated in the evaporator may fall by the gravity in the first extension part 571. The liquid refrigerant may not move to the second extension part 572. The first extension part may be called an ascending part. The first extension part may perform the role of the gas-liquid separator. The length of the first extension part 571 may be longer than 10% and shorter than 50% of the total length of the heat exchanger. The length of the first extension part 571 may be longer than 25% and shorter than 40% of the total length of the heat exchanger. The length of the first extension part 571 may be longer than 30% and shorter than 40% of the total length of the heat exchanger. The third extension part 573 may be provided as long as possible. The heat exchange performance may be obtained by satisfying the entire length of the heat exchanger. The first extension part may be longer than 50% and shorter than 100% of the length of the third extension part. The second extension part 572 may be the shortest. This is because the left and right width of the vacuum insulator is limited. The first extension part may be longer than the second extension part. The first extension may be shorter than three times the length of the second extension.

FIG. 31 is a view illustrating an arrangement of the heat exchanger, the radiant resistance sheet, and the support. Descriptions will be made with reference to FIG. 31.

The following may be optional. The heat exchanger may be placed in the gap between the units of the support. A portion of the gap may have a first portion A covered by the radiation resistance sheet. A portion of the gap may have a second portion B that is not covered by the radiation resistance sheet. The second part may be the removed part 321 of the radiation resistance sheet.

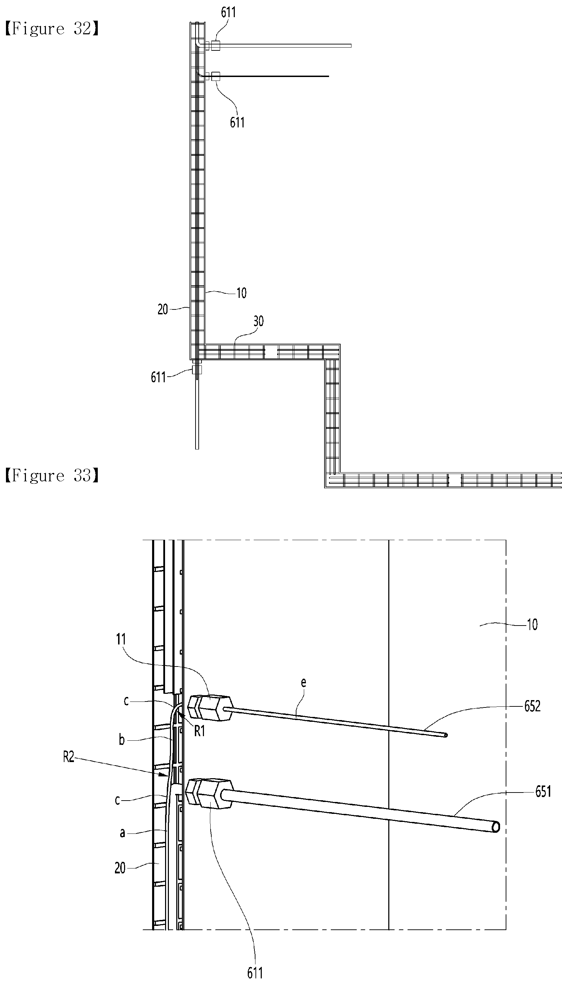

FIG. 32 is a view illustrating an arrangement of the vacuum space of the heat exchanger. Descriptions will be made with reference to FIG. 32.

The following may be optional. At least one of the first and second terminals 65a and 65b may be sealed by the sealing terminal 611. The radiation resistance sheet may be removed from the area through which the heat exchanger passes. The radiation resistance sheet may be provided at a position at which the heat exchanger is not provided. The heat exchanger may extend in the same direction as the extension direction of the support. The heat exchanger may not have a portion that is bent in the thickness direction of the vacuum space. The radiation resistance sheets different from each other may be disposed on the supports different from each other.

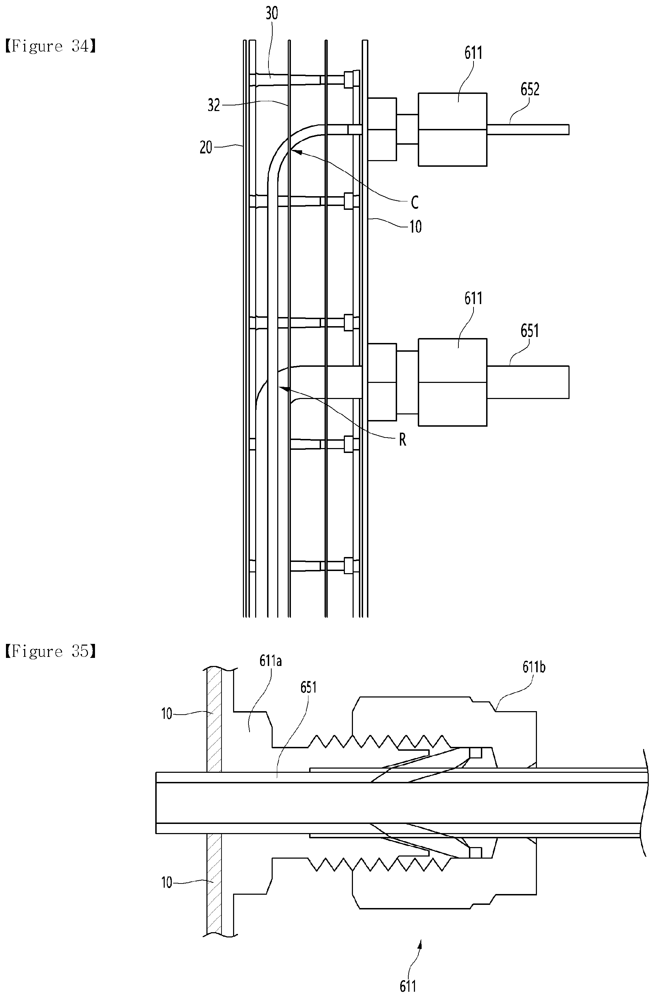

FIG. 33 is a cutaway perspective view of the first terminal, and FIG. 34 is a cross-sectional view of the peripheral portion of the first terminal. This will be described with reference to FIGS. 33 and 34.

The discharge pipe and the suction pipe of the first terminal may be withdrawn after the bending. The following may be optional. The discharge pipe 651 may be withdrawn to the outside after the vertical bending. The suction pipe 652 may have straight sections a, b, and e and a curved section c. A radius of curvature R1 of the curved section due to the one-time bending may be larger than a radius of curvature R2 of the curved section due to the two-time bending. The suction pipe may move to the center of the lattice of the support due to the one-time bending. It may be withdrawn to the outside by the two-time bending. The first terminal may be withdrawn through the other lattice of the support. The first terminal may pass through the center of each lattice. Thus, the sealing terminal may be provided for each pipe. Thus, the interference with the lattice of the support may be prevented as much as possible. Thus, this may reduce an influence of temperature difference between the two pipes. Thus, this may prevent damage due to a thermal shock. Thus, this may prevent stress concentration to the plate area within each lattice. The first terminal may be withdrawn through the first plate. In the adjacent area of the first terminal, the heat exchanger may be adjacent to the second plate. In the adjacent area of the first terminal, the heat exchanger may be adjacent to the second plate relative to the first plate. This may allow the heat exchanger to secure tolerance to be bent vertically.

FIG. 35 is a cross-sectional view of a sealing terminal. Descriptions will be made with reference to FIG. 35.

The following may be optional. The sealing terminal 611 may include first and second sealing terminals 611a and 611b. The first sealing terminal 611a may be coupled to the first plate 10. The first plate 10 and the first sealing terminal 611a may be welded to each other. The first terminal 65a may be inserted into the first sealing terminal 611a. The second sealing terminal 611b may be coupled to the first sealing terminal 611a. During the coupling of the first and second sealing terminals, a ferrule may seal a boundary surface of the first terminal 65a. The sealing terminal may use Swagelok. In addition to the sealing method, various coupling methods such as welding, coupling, fitting, union, brazing, and fitting may be applied for the sealing.

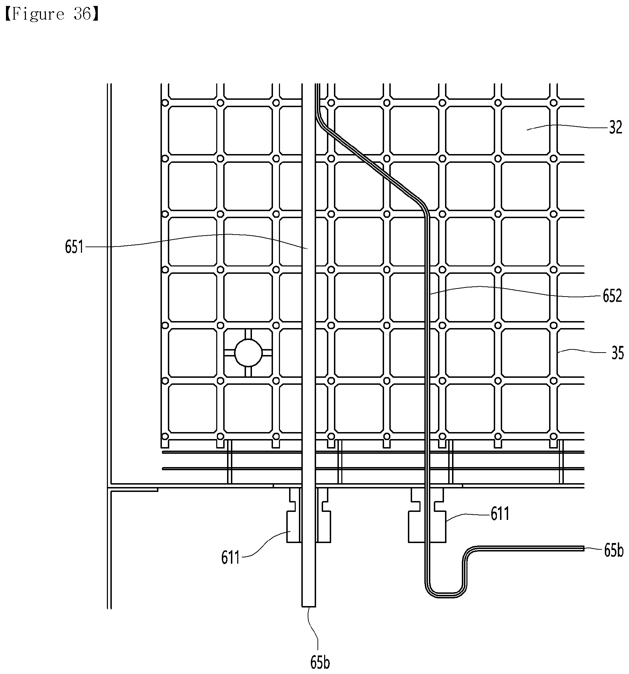

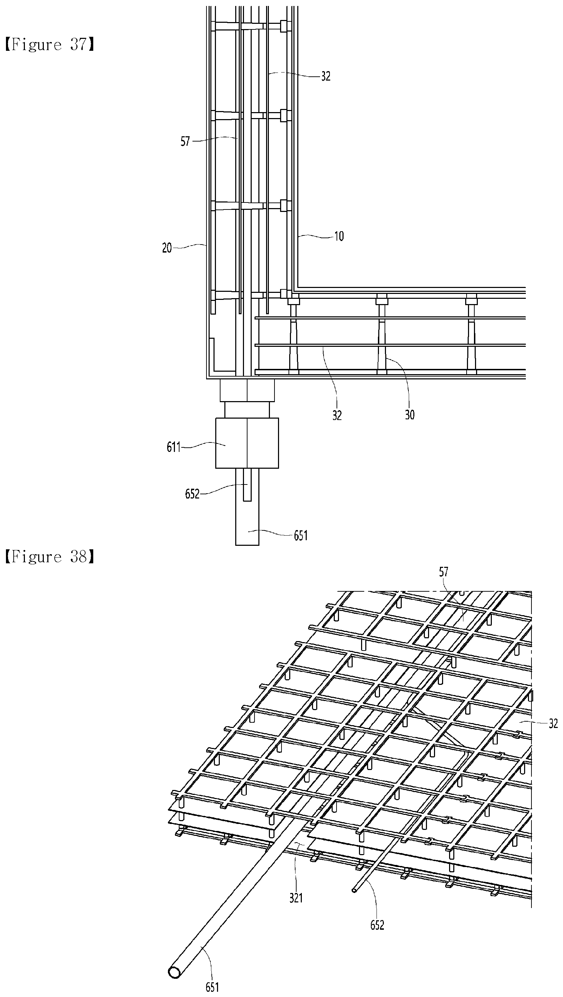

FIGS. 36 to 38 are views for explaining a peripheral portion of the second terminal. FIG. 36 is a plan view illustrating the peripheral portion of the second terminal. FIG. 37 is a cross-sectional view illustrating the peripheral portion of the second terminal. FIG. 38 is a perspective view illustrating the peripheral portion of the second terminal. This will be described with reference to FIGS. 36 to 38.

The following may be optional. The discharge pipe of the second terminal 65b may be withdrawn directly without the bending. The suction pipe 652 of the second terminal 65b may be withdrawn after being bent in the extension direction of the vacuum space. The bending of the suction pipe may extend in a direction that is obliquely inclined with respect to the extension direction of the lattice. The bent part of the suction pipe may not be in contact with the bar 31. The radiation resistance sheet 32 may be provided on a bent portion of the suction pipe. The suction pipe may be smaller in size than the discharge pipe. In the place at which the discharge pipe is provided, the removed part 321 of the radiation resistance sheet may not be provided. The suction pipe and the discharge pipe may be provided with separate sealing terminals. The suction pipe and the discharge pipe may be spaced apart by more than twice the pitch between the lattices of the support.

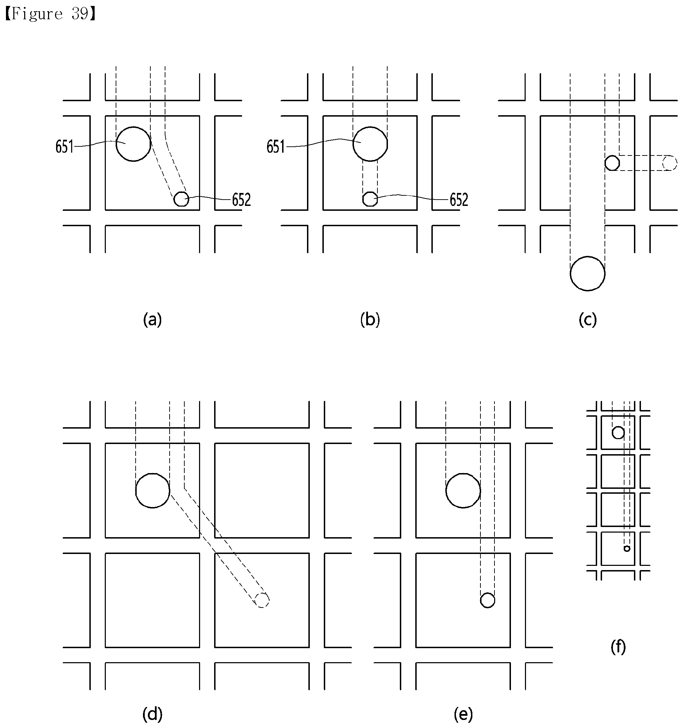

FIG. 39 is a view for explaining details of withdrawal of the end portion of the heat exchanger.

Descriptions will be made with reference to FIG. 39. FIG. 39(a) illustrates a case in which two pipes 651 and 652 are withdrawn furthest from one lattice. In this case, a gap between the pipes may be narrow to make sealing difficult. In this case, it may be difficult to provide stable support. There is a risk of damage due to a temperature difference. FIG. 39(b) illustrates a case in which the pipes are withdrawn vertically to be spaced apart from one lattice. In this case, the same problem may occur as when the pipes are adjacent to each other. FIG. 39(c) illustrates a case in which one pipe is branched vertically. In this case, there may be a problem in refrigerant flow in the branched pipe. In this case, a vertical branched pipe may be difficult to be processed. In this case, there is an advantage in that the pipes are spaced as far apart as possible. FIG. 39D illustrates a case in which the branched pipe is spaced apart in the direction of extension and in the direction of inclination of the lattice after being branched. In this case, problems that the bar is folded may occur. FIG. 39(e) illustrates an example in which one lattice is spaced apart in one direction. In this case, there may be an advantage due to the separation of the first terminal. In this case, there may be a problem that if one pipe is placed at the center of the lattice, the other pipes move away from the center of the lattice. FIG. 39(f) illustrates a case in which end portions of the two pipes are spaced apart by a pitch between at least three lattices. In this case, a problem may occur in handling of the first and second terminals that have been withdrawn. Various embodiments of FIG. 39 are not excluded from the embodiments of the present invention. The various embodiments of FIG. 39 may be combined to provide better embodiments.

FIG. 40 illustrates a case in which the pipes of the heat exchanger are arranged within the lattice. Descriptions will be made with reference to FIG. 40.

FIG. 40(a) illustrates an example in which the discharge pipe is disposed at the center of the lattice. In this case, there may be an advantage in that the heat exchanger is easy to be handled. In this case, a problem may occur to make it difficult to install the radiation resistance sheet. For example, the suction pipe may be too close to the bar. Thus, the radiation resistance sheet may be held on the corresponding area. This is because there is a risk of heat leakage when the radiation resistance sheet is in contact with the suction pipe. FIG. 40(b) illustrates an example in which centers of the two pipes are disposed at the center of the lattice. In this case, a problem in which the installation of the radiation resistance sheet becomes difficult may occur. In this case, a problem in which the pipe has to be turned when the pipe is withdrawn may occur. FIG. 40(c) illustrates that when the pipe is adjacent to the first terminal, the pipe is adjacent to a side of the second plate. In this case, a large path may be provided for bending the pipe. Various embodiments of FIG. 40 are not excluded from the embodiments of the present invention. The various embodiments of FIG. 40 may be combined to provide better embodiments.

FIG. 41 is a view illustrating sealing of the pipe and the plate according to another embodiment. FIG. 41(a) illustrates positions of the first and second terminals of the pipe. FIG. 41(b) illustrates a peripheral portion of the first terminal. FIG. 41(c) illustrates a peripheral portion of the second terminal. Descriptions will be made with reference to FIG. 41.

At least one of the first terminal 65a or the second terminal 65b of the pipe 65 may be sealed to the plate by a joint. The following contents may be applied optionally. The joint may serve to guide the bonding. The joints 648 and 649 may be interposed between the plates 10 and 20 and the pipe 65. The joint may be a joint tube. The joint may be a sealed tube. The sealing tubes 648 and 649 may have different sizes. The joint 648 for the discharge pipe 651 may be larger than the joint 649 for the suction pipe 652. The joints may be adjacent to each other. The joints may be spaced apart from each other. Flanges 101 and 102 for coupling the joint to the plate may be provided. The flange may be provided as one body with the plate 1020. The flange may be provided by processing the plate. The flange may be provided by boring and pressing the plate.

According to the sealing by the joint, the following advantages may optionally be provided. First, there may be an advantage of improving impact resistance. Second, the thermal shock in the refrigerant flow may be reduced. Third, if the plate is thin, it may be easily processed. Fourth, a bonding area may increase. Particularly, in the case of the suction pipe, the bonding area may increase. Fifth, the length of the joint may increase to reinforce coupling strength.

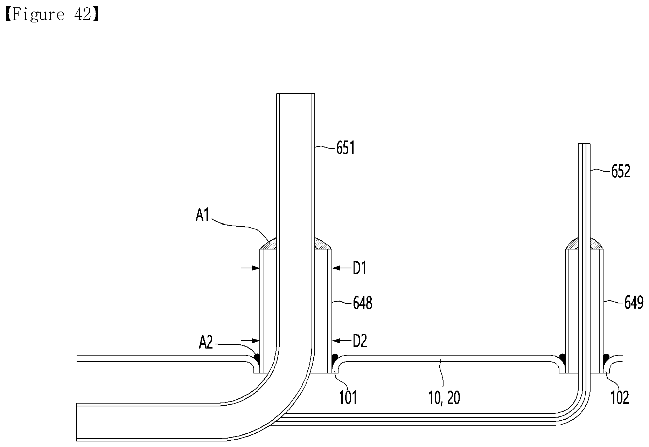

FIG. 42 is a cross-sectional view of one-side joint. Descriptions will be made with reference to FIG. 42. The descriptions of one-side joint or one terminal may be applied similarly to descriptions of the other joint and the other terminal.

The first joint 648 may be provided to be larger than am outer diameter of the discharge pipe 651. The second joint 649 may be provided to be larger than an outer diameter of the suction pipe 652. The joint may be provided as a pipe. The following may be applied optionally. The joint may use the same material as the plate. The joint may be made of stainless steel. The joint and the plate may be bonded by welding. The joint and the plate may be welded at a lower end of the joint. A flange may be provided at the joint between the joint and the plate. A larger area may be bonded by the flange. The welding may be performed by tungsten inert gas (TIG) welding or laser welding. The joint and the plate may be sealed by the coupling. The joint may use copper. The pipe may be bonded by the brazing. The joint and the pipe may use different materials. The pipe may use copper. The joint and the pipe may be bonded by blazing. The joint and the pipe may be bonded by soldering. The pipe may be made of stainless steel. The pipe and the joint may be welded. A length of the joint may be 10 millimeters to 30 millimeters. This standard may reduce thermal shock and provides stable support. A thickness of the joint may be 0.5 millimeters to 1.0 millimeters. The thickness may enable strength to be maintained in welding, brazing, and soldering.

The following may be optional. The lower end of the joint may be advantageous in that a size D2 is larger. The bent part of the pipe may be stably accommodated. An upper end of the joint may be advantageous in that a size D1 is smaller. If a gap between the pipe and the joint is sufficiently narrow, reliability of brazing may be improved. If the gap between the pipe and joint is sufficiently narrow, the joint reliability may be improved. The joint may become smaller in size as moving away from the plate. The joint may become successively smaller as its moves away from the plate. Although not shown, a stepped portion may be provided at the joint. The stepped portion may be used to make upper and lower ends of the joint have the same size or diameter. The stepped portion may ensure that a liquid filler material is sufficiently bonded to two members when upper and lower end portions of the joint are brazed.

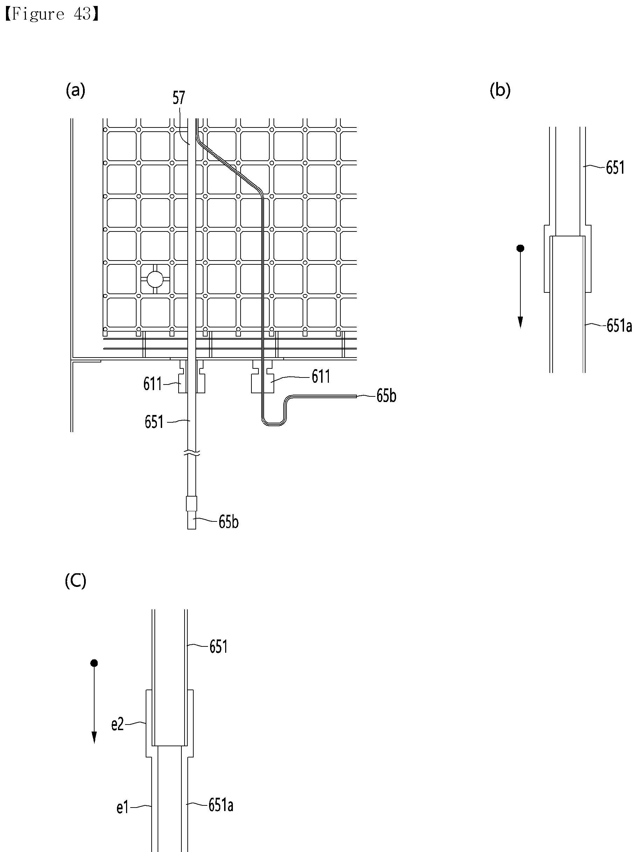

FIG. 43 is a view illustrating bonding of the end portion of the heat exchanger and a connection pipe. FIG. 43(a) is a view illustrating each terminal and the connection pipe of the heat exchanger. FIG. 43(b) is a view illustrating bonding between the end portion of the heat exchanger and the connection pipe according to a comparative example. FIG. 43(c) is a view illustrating bonding between the end portion of the heat exchanger and the connecting pipe according to an embodiment. Descriptions will be made with reference to FIG. 43.

The pipe of the heat exchanger may be sealed to the plate by the sealing terminal 611. It may be connected to the terminal or the connection pipe of the heat exchanger. The second terminal 65b of the heat exchanger may be connected to the connection pipe. The connection pipe may be connected to a device providing a refrigeration cycle. The following may be applied optionally. The connection pipe may extend to a predetermined length. The connection pipe and a terminal of the pipe may be bonded by expanding one of the pipes. The comparative example illustrates a case in which the end portion of each of the pipes 651 and 652 is expanded. The embodiment illustrates a case in which the end portion of each of the connection pipe 651a and 651b is expanded. In the expansion part, the pipe and the connection pipe may be bonded by brazing. During the brazing, the liquid filler metal is penetrated into a boundary surface. It is preferable that the liquid filler material is not penetrated into the inside of the pipe or the connection pipe. This is because the pipe and the connection pipe are blocked. In the comparative example, the filler metal may flow in the direction of the gravity (arrow). Thus, the liquid filler material may not be penetrated into the inside of the pipe and the connection pipe. In the case of the embodiment, the filler metal may flow to be penetrated into the connection pipe.

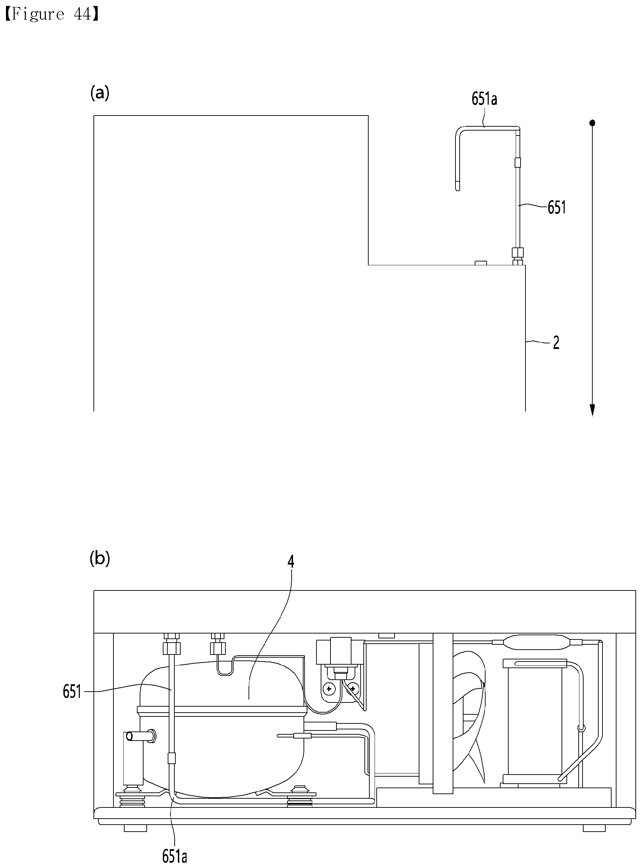

The following may be optional. In an embodiment, the connection pipe may be expanded. Each terminal of the heat exchanger may pass through the plate. If each terminal of the heat exchanger is expanded, a hole in the plate may become larger, or a tolerance management may become difficult. This problem may cause poor sealing of the plate. Destruction of the vacuum space may lead to defects in entire product. A size (e2) of the end portion of the connection pipe may be larger than a size (e1) of the body. In an embodiment, the liquid filler material may be prevented from flowing into the inside of the pipe and the connection pipe. In an embodiment of a method for manufacturing a vacuum adiabatic body, the brazing may be performed by turning the vacuum adiabatic body over. FIG. 44(a) is a view illustrating a state of the vacuum adiabatic body before and after the brazing. FIG. 44(b) is a view illustrating a state of the vacuum adiabatic body after the brazing is completed.

Descriptions will be made with reference to FIG. 44. An arrow may indicate the direction of gravity. The connection pipe may be placed upward with respect to the direction of the gravity. The connection pipe may be expanded at the bonding part between the connection pipe 651a and the pipe 651. The pipe may be inserted into the insider of the connection pipe. Even if the liquid filler flows down by the gravity, it may not be penetrated into the inside of the connection pipe and the piping.

A method for manufacturing a vacuum adiabatic body an embodiment may include a process of expanding an end portion of a connection pipe, a process of disposing a heat exchanger in a vacuum space, a process of coupling the heat exchanger to a plate, a process of inverting a coupling body of the connection pipe and the plate, a process of coupling the end portion of the connection pipe to the heat exchanger, and a process of assembling a refrigeration system. The refrigeration system may include components such as a compressor and a condenser. The following may be optional. The process of inverting the connection body of the connection pipe and the plate may be performed before the process of connecting the end portion of the connection pipe to the heat exchanger. Thereafter, it may turn over again to be returned to the correct posture. At least one of the processes of expanding the end portion of the connection pipe and disposing the heat exchanger in the vacuum space may be performed before at least one of the steps of inverting a coupling component of the connection pipe and the plate and coupling the end portion of the connection pipe to the heat exchanger. The process of connecting the end portion of the connection pipe to the heat exchanger, and the process of assembling the refrigeration system may be performed after the process of inverting the connecting component of the connection pipe and the plate.

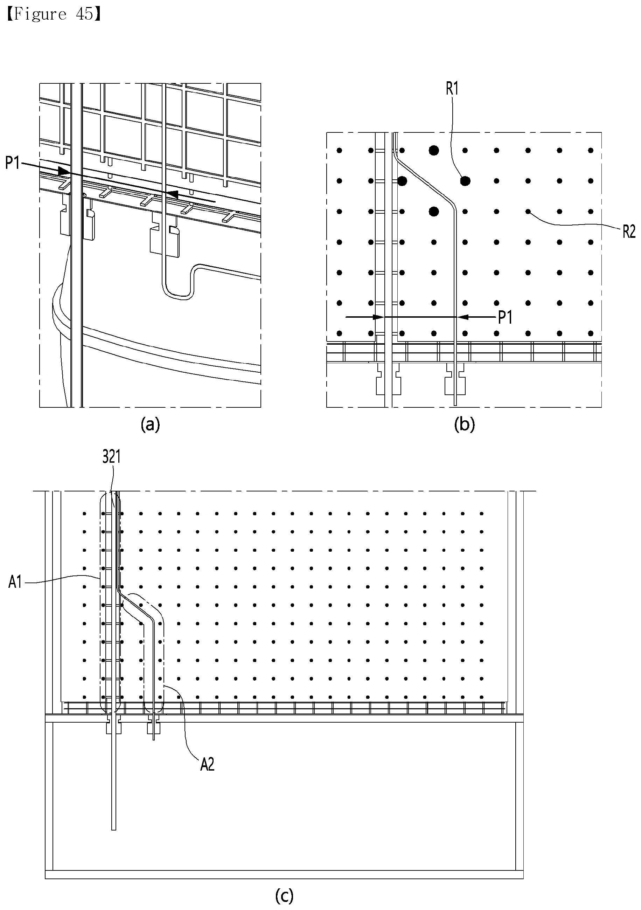

FIG. 45 is a view illustrating a relationship between the end portion of the heat exchanger, the support, and the radiant resistance sheet. FIG. 45 is a perspective view illustrating a relationship between the end portion of the heat exchanger and the support. FIG. 45 is a plan view illustrating a relationship between the end portion of the heat exchanger and the support. FIG. 45 is a plan view illustrating a relationship between the end portion of the heat exchanger and the radiant resistance sheet. Descriptions will be made with reference to FIG. 45.

The following contents may be applied optionally. The support 30 may not be in contact with the heat exchanger. The bar 31 of the support may not be in contact with the pipe. The pipe may be bent. A portion of the support in the path of the pipe may be removed. The bar 31 in the path of the pipe may be removed. The adjacent bar R1 on the area on which the bar is removed may be reinforced. The adjacent bar R1 may be provided larger than the other bar R2. The adjacent bar R1 may have a larger cross-sectional area than the other bar R2. The adjacent bar R1 may have a larger diameter than the other bar R2. The adjacent bar R1 may have an additional separate member including a ring, a rib, and a boss to reinforce strength, unlike the other bar R2. A portion of the radiation resistance sheet may be removed from the path passing through the heat exchanger. The removed area on which the radiation resistance sheet has been removed is indicated as A1. A portion of the radiation resistance sheet may not be removed from the path passing through the heat exchanger. The unremoved area on which the radiation resistance sheet is not removed is marked as A2. The removed area may pass through at least one of the discharge pipe or the suction pipe. The suction pipe may pass through the unremoved area. A pipe having a small diameter may pass through the unremoved area.

### INDUSTRIAL APPLICABILITY

According to the present invention, the heat exchanger may be conveniently installed inside the vacuum space.

## Claims

1. A vacuum adiabatic body comprising:
a first plate having a first temperature;
a second plate having a second temperature different from the first temperature;
a vacuum space provided between the first plate and the second plate;
a support provided in at least one of the inside of the vacuum space or a space adjacent to the first and second plates to maintain a gap of the vacuum space; and
a pipe having a portion disposed in the vacuum space.

2. The vacuum adiabatic body according to claim 1, wherein the pipe comprises a first pipe and a second pipe having a portion that is in contact with the first pipe,
wherein a portion at which the first pipe and the second pipe are in contact with each other comprises only a first portion extending in a first direction, a second portion extending in a second direction different from the first direction, and a third portion extending closer to the first direction than the second direction.

3. The vacuum adiabatic body according to claim 2, wherein the sum of lengths of the first portion and the third portion is greater than a length of the second portion.

4. The vacuum adiabatic body according to claim 1, wherein at least two units are coupled to provide the support, a gap is provided between the at least two units, and the pipe is placed in the gap.

5. The vacuum adiabatic body according to claim 1, wherein the support comprises a support plate having a portion extending in a longitudinal direction of the vacuum space, wherein the support plate is provided to define an empty space for providing a space in which the pipe is disposed.

6. The vacuum adiabatic body according to claim 5, wherein the support plate is provided in plurality,
wherein the empty space is provided in a spaced space between the plurality of support plates.

7. The vacuum adiabatic body according to claim 5, wherein the support plate comprises a plurality of ribs having a lattice shape,
wherein the empty space is defined in a space, in which the ribs are not provided, in the support plate.

8. The vacuum adiabatic body according to claim 1, wherein the support comprises an injection structure provided when the support is injected, wherein the pipe is supported by the injection structure.

9. The vacuum adiabatic body according to claim 8, wherein the injection structure comprises a guide bar having a portion extending in a height direction of the vacuum space, wherein the pipe is supported by the guide bar.

10. The vacuum adiabatic body according to claim 8, wherein the injection structure comprises a guide bar into which an injection liquid is introduced when the support is injected, wherein the pipe is supported by the guide bar.

11. The vacuum adiabatic body according to claim 8, wherein the injection structure comprises:
an injection base having a portion extending in a longitudinal direction of the vacuum space; and
a guide bar, wherein the pipe is supported by the guide bar.

12. The vacuum adiabatic body according to claim 8, wherein the support comprises a bar having a portion extending in a height direction of the vacuum space,
wherein a size of the guide bar is greater than that of the bar of the support.

13. The vacuum adiabatic body according to claim 8, wherein the injection structure comprises a guide bar, and
the vacuum adiabatic body further comprises a gap block coupled to or supported by a free end of the guide bar.

14. The vacuum adiabatic body according to claim 1, wherein the support comprises a support plate extending in a longitudinal direction of the vacuum space,
wherein the pipe is supported by the support plate.

15. The vacuum adiabatic body according to claim 14, wherein the support plate comprises a structure configured to support the pipe,
wherein the structure is configured to support the pipe in an open curve.

16. The vacuum adiabatic body according to claim 14, wherein the support plate comprises a structure configured to support the pipe,
wherein the structure comprises a seating part having a shape corresponding to an outer appearance of the pipe,
wherein the seating part is provided to be deformed during and after insertion of the pipe, and the seating part comprises a groove in which the pipe is seated.

17. The vacuum adiabatic body according to claim 14, wherein the support plate comprises a structure configured to support the pipe,
wherein the structure comprises:
a seating part having a shape corresponding to an outer appearance of the pipe; and
a gap block provided to be supported by the seating part.

18. The vacuum adiabatic body according to claim 1, wherein the support comprises a bar extending in a height direction of the vacuum space,
wherein the pipe is supported by the bar.

19. The vacuum adiabatic body according to claim 18, wherein the bar comprises a structure configured to support the pipe,
wherein the structure comprises an extension bar extending in a direction different from the direction in which the bar extends.

20. The vacuum adiabatic body according to claim 19, wherein the extension part comprises a first extension bar and a second extension bar, which are provided in a pair,
wherein the pipe is provided between the first and second extension bars.

21. The vacuum adiabatic body according to claim 1, wherein the support comprises a plurality of bars provided to be spaced a predetermined distance from each other,
wherein at least one of gaps between the plurality of bars adjacent to a path of the pipe is greater than a gap between the plurality of bars that is not adjacent to the path of the pipe.

22. The vacuum adiabatic body according to claim 1, wherein the support comprises at least one commonization unit that is commonly used,
wherein at least one commonization unit is used on the largest surface among several surfaces of the vacuum adiabatic body, and
at least one unit that is smaller than the commonization unit on other surfaces of the vacuum adiabatic body.
